# EUROPEAN PATENT SPECIFICATION

(11) **EP 1 701 235 B1**
(45) Date of publication and mention of the grant of the patent: **12.07.2017**
(21) Application number: 06251317.1
(22) Date of filing: 13.03.2006
(51) Int. Cl.: G05D 23/12, G05D 23/02

(54) **Control head for a thermostatic valve**
Thermostatisches Ventiloberteil
Tête de robinet thermostatique

(30) Priority: 11.03.2005 GB 0505044
(43) Date of publication of application: 13.09.2006
(73) Proprietor: Pegler Limited, Doncaster, South Yorkshire DN4 8DF (GB)
(72) Inventor: Nortcliffe, Richard Timothy, South Yorkshire S64 8EH (GB)
(74) Representative: Wilson Gunn

(56) References cited:
- EP-A1- 0 694 722
- EP-A2- 0 903 525
- EP-A2- 1 359 489
- WO-A1-94/29623
- DE-C1- 19 929 983
- GB-A- 1 564 047
- US-A- 4 232 817

## Description

The present invention relates to a control head for a thermostatic valve, particularly for a radiator valve.

Central heating systems typically comprise a boiler for heating water, and a plurality of water/air heat exchangers (normally, but misleadingly, called radiators: this convention will be used herein) and a system of pipes through which hot water is pumped from the boiler to the radiators and back again.

It is conventional for each radiator to have a water inlet and a water outlet passage, each passage being provided with a flow-control valve. One such valve is set by an installer to limit the maximum flow through the radiator, while the other is provided with a user control by means of which the flow of water through the radiator can be modified in order that its heat output can be controlled.

In a simple heating system, the user control valve may be provided with a manual control by means of which the user can fix the rate of flow through the radiator. This allows only limited control over the amount of heat output by the radiator, and controls such as these are often used as on/off controls, since their intermediate settings are often difficult for a user to control.

It is widely recognised that such simple controls are in many cases unsatisfactory. They do not allow a constant temperature to be maintained in a space, thereby leading to inefficient use of energy and discomfort for people occupying the space. Additionally such simple controls may not comply with future Climate Change legislation.

A conventional solution to this problem is to provide each radiator with a valve which controls the flow of water through the radiator in response to changes in ambient temperature, the flow being increased as the temperature falls. Such valves (known as thermostatic valves) typically have a user control by means of which the temperature which the user desires to achieve can be controlled.

A thermostatic valve typically has two principal interconnected components: a flow valve and a control head. The flow valve has a body which is connected at the inlet or the outlet of a radiator. An operating pin projects from the body, and operates such that flow of water through the valve is restricted when the pin is urged into the body against a restoring spring force. Within the control head, a sensing element is provided which undergoes linear expansion as its temperature increases. The expansion acts mechanically to operate the pin, so restricting flow as temperature increases and correspondingly allowing greater flow when the sensing element contracts and the pin is urged further out of the body by the restoring spring force.

In order to 'set' the flow through the valve so as to allow a room to be maintained at a desired temperature, the control head is adjustable. The adjustment takes the form of adjusting the axial position of the sensing element within the control head. As a result the amount of linear expansion of the sensing element (and hence the ambient temperature) required to open or close the flow valve varies.

Typically, the control head is provided with a housing arranged so that rotation of the housing moves the sensing element axially. In a few arrangements this is achieved in such a way that there is no axial motion of the housing when rotated. It has been found that whilst this allows a user to conveniently vary the target temperature for a room, it is difficult to maintain this target temperature over a sustained period of time. This is due to the tendency of the control head to 'drift' over repeated operation cycles and also due to inadvertent knocks to the housing administered by the user or others in the room.

It is known for this problem to be addressed by providing one or more pins, which can be used to limit the movement of the sensing element. This reduces drifting and can prevent an accidental knock to the housing from resetting the control head. It is also known to provide this function with dedicated sliding blocks as an alternative to pins. These methods have the disadvantage that such pins or blocks tend to be rather small, and in the case of removable pins, easily lost. As such they can be difficult to adjust, particularly for elderly, arthritic or disabled users.

In WO94/29623 discloses a control head for a thermostatic valve having a rotary housing which enables adjustment of the valve. The control head is provided with a security sleeve which engages over the rotary housing so that the rotary housing can be locked not only at a predetermined desired value, but can also be adjustable over a selectable range of desired values which is smaller than the normal adjustment range. A coupling element is provided between the rotary housing and the security sleeve. The coupling element may be provided in different rotated angular positions in relation to the rotary housing such that the coupling element is either arranged to be non-rotatably coupled to the housing and to the security sleeve, or allows a limited rotation of the rotary housing between two desired value limits.

EP1359489 discloses a control head for a thermostatic valve, comprising: a body provided with means for fastening to the valve; a rotating housing for selection of the desired temperature by the user; and a ring movable both in the axial direction and rotationally. The ring can be displaced axially with respect to the body and housing to lock or unlock rotary movement of the housing.

EP0903525 discloses a control head for a thermostatic valve, comprising: a rotating housing for adjustment of the valve; and a ring for controlling rotation of the housing. The ring is mounted in a rotatable and axially slidable manner along the edge of the housing. By axial movement of the ring relative to the housing the ring may be selectively engageable with and disengageable from the housing in a plurality of angular positions, in which suitable stop members lock or allow rotation of the housing.

DE19929983 discloses a control head for a thermostatic valve, comprising: a base; and a rotating housing for selection of the desired temperature by the user. There is also provided a limiting part that is movably mounted in different positions on a collar of the housing. The limiting part can be moved axially between a first position to engage teeth with teeth provided on the collar and a disengaged second position.

EP0694722 discloses a control head for a thermostatic valve, comprising a rotatable adjustment housing for adjustment of the valve; and a limiting ring. The limiting ring is slideably mounted on the outside of the housing and limits the travel of the adjustment housing. In particular the ring may be moved axially relative to the housing to insert or remove fingers on the ring from cells provided in the housing. To further secure the desired limitation of rotation of housing, a tamperproof ring may be locked in position outside the housing and the limiting ring.

US 4 232 817 A discloses an adjustment control for a thermostatic valve consisting of a non-rotatable component to the valve on which is mounted a rotatable knob for setting the temperature. A releasable auxiliary device is provided and is operable between the component and the knob at a predetermined rotational position of the knob. The auxiliary device is operable to releasably restrict further rotation of the knob continuing in the same direction beyond the predetermined stopping point.

GB 1 564 047 discloses a thermostatic regulating valve comprising an auxiliary safety device circumferentially surrounding the skirt of a temperature adjusting knob, the safety unit being clamped thereto in order to restrict rotation of the knob. This patent also discloses the secondary safety valve being an anti-theft device by clamping the valve to the housing.

It is therefore an object of the present invention to provide a control head which overcomes or alleviates such problems.

According to a first aspect of the present invention there is provided a control head for a flow valve, the control head comprising: a housing and an engaging element, the engaging element adapted to engage an operating pin of a flow valve and the housing being rotatable about an axis to cause axial movement of said engaging element, characterised in that said housing is movable between an unlocked position whereby the housing can rotate about its axis, and a locked position whereby the housing cannot rotate about its axis, and wherein the movement of the housing between the locked and unlocked positions is an axial movement.

This provides a control head by means of which a user can conveniently prevent drifting or inadvertent resetting of a thermostatic valve. Advantageously, this is achieved without the use of small and or difficult to adjust parts.

The engaging element may directly or indirectly engage the engaging pin. Direct engagement may involve the engaging element abutting the engaging element. Indirect engagement may take place via a connecting part. The connecting part may be a part abutting both the engaging element and the operating pin, however, in some embodiments the connecting part may be a hydraulic transfer system operable to transfer movement of the engaging element to movement of the operating pin.

The flow valve may be a flow valve of the type having an operating pin projecting from the body of the valve against a biasing force, the flow through the valve being restricted when the operating pin is urged into the body of the valve.

The engaging element may be connected to a sensing element, which undergoes linear expansion in response to a change in ambient temperature. The sensing element is thus operable to move the engaging element in response to a change in ambient temperature. Preferably, the sensing element is mounted within the housing such that its linear expansion takes place axially and the engaging element is thus moved axially.

The sensing element may undergo linear expansion in response to local temperature variation or in response to remote temperature variations. If the sensing element undergoes liner expansion in response to local temperature variations, it may be embodied by a liquid or wax cartridge. If the sensing element undergoes liner expansion in response to remote temperature variations, it may comprise a bellows having an expandable chamber connected to the engaging element and a remotely located reservoir in communication therewith. The chamber is adapted so that it is expandable in the direction of the axis of the housing. The reservoir and chamber are filled with a suitable fluid, sealed and may be connected via a pipe. Changes in the fluid volume in response to temperature change thus cause the chamber to expand or contract. Preferably, the reservoir has a much greater volume than the chamber so that changes in temperature local to the reservoir have a greater effect on the expansion of the chamber than changes in temperature local to the chamber.

A compensation mechanism may be provided to connect the sensing element to the engaging element. This can prevent the overloading of components of the control head. The compensation mechanism may comprise a spring housing and a spring contained therein.

A carrier may be provided within the housing, the sensing element being disposed within the carrier and the engaging element projecting from the carrier. Preferably, the carrier comprises a base and a body. The body and the base are preferably movable relative to one another in a direction parallel to the axis of the housing. This may be achieved by complementary screw threads provided on the base and the body.

In one preferred embodiment, the base is mounted on the valve and is adapted such that it does not rotate with respect to the valve and the body is adapted to co-rotate with the housing. This may be achieved by providing features on the outer surface of said body which engage with features of said housing. The rotation of the housing thus causes axial movement of the body relative to the base. The sensing element may be mounted on the body and thus may also be moved axially by rotation of the housing.

Preferably, the base and the housing are provided with co-operating features allowing the housing to be retained in and to move between the locked and unlocked positions. These features may be adapted to prevent rotation of the housing when the housing is in the locked position.

The co-operating features may comprise sets of locking teeth provided on the housing and on the base, which intermesh when the housing is in the locked position preventing rotation of the housing and which do not intermesh when the housing is in the unlocked position thereby allowing rotation of the housing. Channels in either the housing or the base may be provided such that the locking teeth do not engage with any part of either the base or the housing when the housing is in the unlocked position.

Preferably the housing and the base are adapted such that the housing 'snap fits' in the locked and unlocked positions. This may be achieved by the provision of a projecting lip on either the housing or the base and complementary formations, which may be grooves or other indented formations on the base or housing.

Preferably, a groove is provided in which the lip fits when the housing is in the unlocked position and an indented formation is provided in which the lip fits when the housing is in the locked position. The indented formation may be substantially smoothly sloping such that movement from the locked to the unlocked position may be achieved without the use of a dedicated tool.

The housing may comprise inner and outer walls separated from each other by a gap. Preferably, the gap does not extend the full height of the housing. The cooperating features of the housing and the snap fitting features of the housing are preferably provided on the inner wall of the housing. This provision of the separate inner wall can improve the operation of the snap-fitting features, due to the fact that the inner wall may be made thinner and more flexible than a single housing wall.

The gap between the inner and outer walls may be adapted to receive a locking ring, the locking ring being operable in a first position, to allow movement of the housing between the locked and unlocked positions and in a second position, to prevent movement of the housing between the locked and unlocked positions. The locking ring may comprise a ring having a series of ridge projections on its inner and outer surfaces. The ridge projections are preferably provided at corresponding locking ring may comprise a ring having a series of ridge projections on its inner and outer surfaces. The ridge projections are preferably provided at corresponding positions on the inner and outer surfaces of the ring. The inner and outer walls may be provided with suitable features enabling engagement with the locking ring. In one embodiment, the inner wall of the housing may be provided with a series of splits corresponding to the ridge projections of the inner surface of the locking ring and the outer wall of the housing may be provided with a series of slots corresponding to the ridge projections of the outer surface of the locking ring. In a preferred embodiment, there are twice as many slots provided on the outer wall as there are slits provided on the inner wall.

The locking ring may be inserted into the gap between the inner and outer walls of the housing. When the ridge projections of the locking ring are aligned with the slots of the outer wall and the slits of the inner wall, the housing is free to be moved axially between the locked and unlocked positions, thus corresponding to the first position above. When the ridge projections of the locking ring are aligned with the slots of the outer wall but not aligned with the slits of the inner wall, the ridge projections on the inner surface of the locking ring act to prevent deformation of the inner wall relative to the outer wall, thus corresponding to the second position above. This prevents the housing from moving axially between the locked and unlocked positions.

The locking ring may be removed and/or repositioned by means of a suitable tool. The tool may comprise a split ring having one or more upstanding hook portions. The hook portions are adapted to be inserted into the gap between the outer surface of the locking ring and the outer wall of the housing so as to engage the ridge projections on the outer surface of the hooking ring with hooking tabs projecting from the sides of the hook portions. The hook portions may be provided with bevelled upper edges to facilitate insertion between the looking ring and the outer wall. Once fully inserted, the split ring may be rotated such that a hooking tab at the side of each hook portion engages with the upper part of a ridge projection of the locking ring. The locking ring can then be removed by pulling on the split ring. If desired the locking ring may then be reinserted in an alternative position.

As an alternative embodiment to the locking ring embodiment above, the indented formation may be adapted to provide an engaging edge, the edge adapted such that a dedicated tool is required to move the lip past the edge from the locked position into the unlocked position. The engaging edge may have a jagged engaging surface. The dedicated tool may be preferably provided with a smoothly sloping surface terminating in an abutting edge complementary to the engaging edge and adapted to abut the engaging edge. When the abutting edge abuts the engaging edge the lip is free to be moved over the engaging edge and thereby the housing may be moved from the locked to the unlocked position. The indented formation may be substantially smoothly sloping but modifiable to provide an engaging edge. For instance, the indented formation may be provided with one or more breakable portions, which, when broken, may be removed to reveal for use the engaging edge. Advantageously, this arrangement allows the control head to be provided initially in a form that is readily adjustable by hand and subsequently modified to require the use of a dedicated tool to move the lip past the edge from the locked position into the unlocked position.

In a preferred embodiment, the lip is provided on the housing and the indented formation is provided on the base. In such an embodiment the dedicated tool preferably comprises a split ring having an edge adapted to complement the indented formation and a smoothly sloping outer surface leading to said edge.

A multiplicity of slits may be formed in the housing adjacent the sensing element. Advantageously, further slits are provided in the body whereby a flow of air through the housing can be established either in an axial direction or in a direction transverse to the axis.

In a preferred embodiment, at least one locking means (for example, a pin) is provided whereby the range of movement of the body may be limited to either a predefmed maximum or minimum. Two such locking means may be provided whereby rotational movement can be bound within a preset range. In a preferred embodiment, the locking means comprises a first pin insertable into the screw thread connecting the base and the body and two range limiting pins which may be positioned such that they obstruct the movement of the first pin along the screw thread beyond predetermined limits. The range limiting pins may be inserted from below and may comprise thin wire pins or in some preferred embodiments thin plastic pins.

The housing may be removable from the control head. This allows a damaged housing to be replaced or for a housing of a different outward appearance to be substituted if desired. This may be achieved by use of a suitable tool. The tool may be a split ring type tool according to either type described above having a second edge adapted to lift the lip over a complementary groove.

The control head may be secured to a flow valve by means of a ring fitting. In some embodiments, the ring fitting may be provided with slots in its outer surface facilitating the insertion and removal of range limiting pins. Such slots also permit the use of suitable tooling ('C' or peg spanner) to tighten the ring beyond hand tight and thus prevent tampering. In alternative preferred embodiments, a smaller ring fitting may be provided, which thereby avoids the necessity to provide such slots.

In an alternative embodiment to those wherein the control head is mounted on the valve, the control head may be mounted apart from the valve and connected to the valve via a hydraulic transfer system. As described above, the hydraulic transfer system is operable to transfer movement of the engaging element to the operating pin of the valve. The hydraulic transfer system may be adapted in any suitable manner so as to transfer movement of the engaging element to the operating pin. In such embodiments, the control head may be mounted on a suitable surface, in particular a wall. This can allow the control head to be more readily accessible to a user than if it were directly mounted on the valve. Furthermore, this enables the sensing element in the control head to be responsive to a more accurate approximation of ambient temperature in the room if it is located at a distance from the radiator.

In such an embodiment the base is preferably mounted on the surface such that it does not rotate with respect to the surface and the body is adapted to co-rotate with the housing. This may be achieved by providing features on the outer surface of said body which engage with features of said housing. The rotation of the housing thus causes axial movement of the body relative to the base. The mounting of the sensing element in the body is preferably arranged such that the engaging element moves axially in response to rotation of the housing but the sensing element substantially does not move axially in response to rotation of the housing.

The base may be mounted to the surface via a mounting plate. In some embodiments, the mounting plate may be formed integrally with the base. The mounting plate may also be adapted to secure housing retaining means to the surface such that the housing retaining means do not rotate relative to the surface. In some embodiments, the housing retaining means may be formed integrally with the mounting plate.

Preferably, the housing retaining element and the housing are provided with co-operating features allowing the housing to be retained in and to move between the locked and unlocked positions. These features may be adapted to prevent rotation of the housing when the housing is in the locked position.

The co-operating features may comprise sets of locking teeth provided on the housing and on the housing retaining element, which intermesh when the housing is in the locked position preventing rotation of the housing and which do not intermesh when the housing is in the unlocked position thereby allowing rotation of the housing. Channels in either the housing or the base may be provided such that the locking teeth do not engage with any part of either the housing retaining element or the housing when the housing is in the unlocked position.

The movement of the housing between said locked and unlocked positions is preferably an axial movement. Preferably the housing and the housing retaining element are adapted such that the housing 'snap fits' in the locked and unlocked positions. This may be achieved by the provision of a projecting lip on either the housing or the housing retaining element and complementary formations, which may be grooves or other indented formations on the housing retaining element or housing.

Preferably, a projecting lip is provided which the lip abuts when the housing is in the unlocked position and an indented formation is provided in which the lip fits when the housing is in the locked position. The indented formation may be substantially smoothly sloping such that movement from the locked to the unlocked position may be achieved without the use of a dedicated tool. The projecting lip and/or the indented formation may be provided by portions of the housing retaining element or portions of the mounting plate or a combination of both.

According to a second aspect of the present invention there is provided a flow valve incorporating a control head as hereinbefore described.

Said flow valve may be a thermostatic flow valve for regulating the supply of water to a radiator.

In order that the invention is more clearly understood, a number of embodiments will be described in detail, by way of example only, with reference to the accompanying drawings in which:
Figure 1 is a view of a control head for a thermostatic radiator valve according to the present invention, in the unlocked position;
Figure 2 is a view of a control head for a thermostatic radiator valve according to the present invention, in the locked position;
Figure 3a is an exploded view of a first embodiment of a control head according to the present invention;
Figure 3b is an expanded view of the marked section of Figure 3a;
Figure 3c is an expanded view of the marked section of Figure 3a;
Figure 4a is a partial cross-sectional view of the control head of Figure 3, in the unlocked position;
Figure 4b is an expanded view of the marked section of Figure 4a;
Figure 5a is a cross-sectional view of the control head of Figure 3, in the locked position;
Figure 5b is an expanded view of the marked section of Figure 5a;
Figure 6a is an exploded view of a second embodiment of a control head according to the present invention;
Figure 6b is an expanded view of the marked section of figure 6a;
Figure 6c is an expanded view of the marked section of figure 6a;
Figure 7a is a partial cross-sectional view of the control head of Figure 6, in the unlocked position;
Figure 7b is an expanded view of the marked section of Figure 7a;
Figure 8a is a cross-sectional view of the control head of Figure 6, in the locked position;
Figure 8b is an expanded view of the marked section of Figure 8a;
Figure 9 is a view of a control head for a thermostatic radiator valve according to the present invention, in the unlocked position, in an embodiment wherein a remote temperature sensing element is provided;
Figure 10 is a view of the control head for a thermostatic radiator valve of Figure 9, in the locked position;
Figure 11 a is an exploded view of an embodiment of a control head according to the present invention wherein a remote temperature sensing element is provided;
Figure 11b is an expanded view of the marked section of Figure 11a;
Figure 11c is an expanded view of the marked section of Figure 11a;
Figure 12a is a partial cross-sectional view of the control head of Figure 11, in the unlocked position;
Figure 12b is an expanded view of the marked section of Figure 12a;
Figure 13a is a cross-sectional view of the control head of Figure 11, in the locked position;
Figure 13b is an expanded view of the marked section of Figure 13a;
Figure 14a is a perspective view of a tool for facilitating the release or movement of a locking ring shown in figure 14b;
Figure 14b is a perspective view of a locking ring for preventing movement of the housing from the locked to the unlocked position;
Figure 14c is a perspective view of the tool of figure 14a in engagement with the locking ring of figure 14b;
Figure 15a is an exploded view of an alternative arrangement of a first embodiment of a control head according to the present invention;
Figure 15b is an expanded view of the marked section of Figure 15a;
Figure 15c is an expanded view of the marked section of Figure 15a;
Figure 16a is a partial cross-sectional view of the control head of Figure 15, in the unlocked position;
Figure 16b is an expanded view of the marked section of Figure 16a;
Figure 17a is a cross-sectional view of the control head of Figure 15, in the locked position;
Figure 17b is an expanded view of the marked section of Figure 17a;
Figure 18a is a perspective view of a tool for facilitating the movement of a control head according to figures 15 to 17 from the locked position to the unlocked position or for removing the housing of a control head according to the present invention;
Figure 18b is an alternative perspective view of the tool of Figure 18a;
Figure 19 is a view of a wall mountable control head for a thermostatic radiator valve according to the present invention, in the unlocked position;
Figure 20 is a view of a wall mountable control head for a thermostatic radiator valve according to the present invention, in the locked position;
Figure 21 is an exploded view of the wall mountable control head of figures 19 and 20, including detailed views of marked areas A and B;
Figure 22a is a side view of the unlocked wall mountable control head of figure 19;
Figure 22b is a cross-sectional view of the unlocked wall mountable control head along line A-A in figure 22a, including a detailed view of marked area B;
Figure 23a is a side view of the unlocked wall mountable control head of figure 20; and
Figure 23b is a cross-sectional view of the locked wall mountable control head along line A-A in figure 23a, including a detailed view of marked area B.

A thermostatic valve has two principal interconnected components; a flow valve (not shown) and a control head 100. The flow valve has a body which is connected at the inlet or the outlet of a radiator. An operating pin projects from the body, and operates such that flow of water through the valve is restricted when the pin is urged into the body against a restoring spring force. Within the control head 100, a sensing element 107, 207, 307 is provided which undergoes linear expansion as its temperature increases. The expansion acts mechanically to operate the pin, so restricting flow as temperature increases and correspondingly allowing greater flow when the sensing element 107, 207, 307 contracts and the pin is urged further out of the body by the restoring spring force.

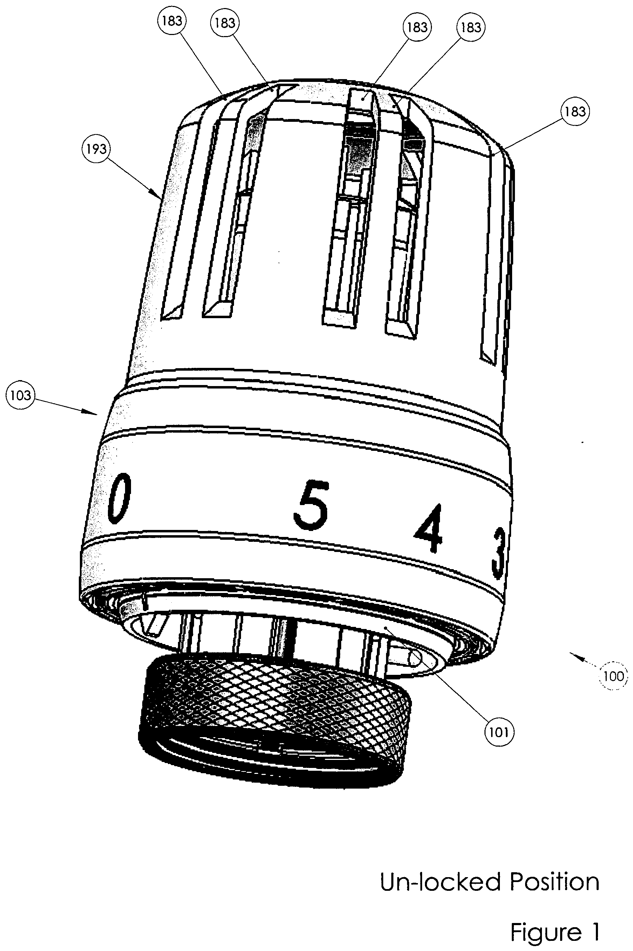

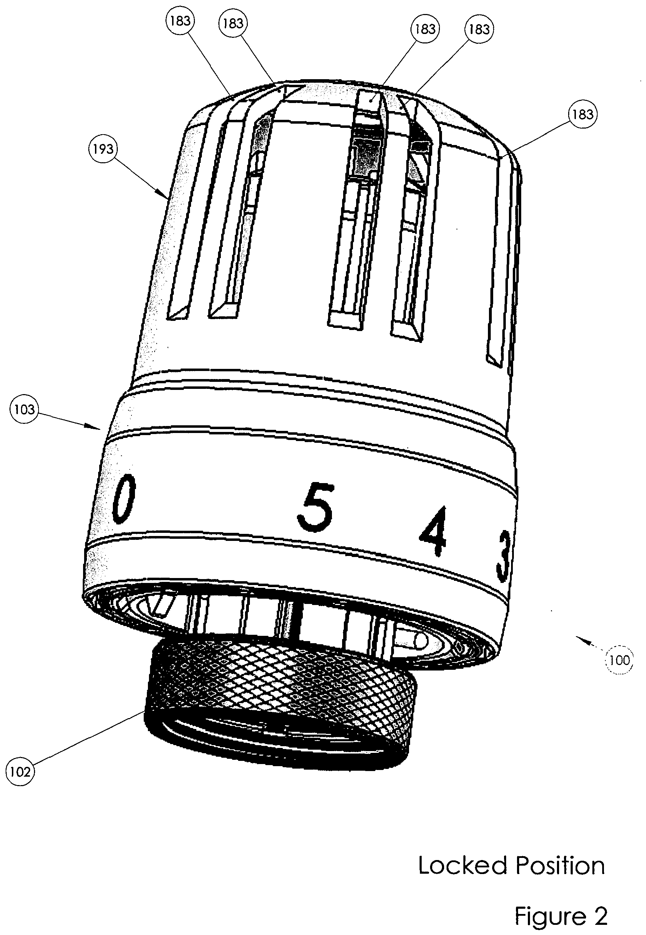

Referring now to Figures 1 and 2, a control head 100 for a flow valve comprises a housing 103 which may be rotated about a central axis A. The housing 103 may be moved axially between an unlocked position shown in Figure 1 and a locked position shown in Figure 2. In the unlocked position, rotation of the housing 103 causes axial movement of the sensing element 107, 207, 307 and thus opens or closes the valve. In the locked position, rotation of the housing 103 is prevented.

The housing is provided with a plurality of slits 183 provided in its upper portion 193. The slits 183 allow a flow of air to reach the sensing element 107, 207, 307. The housing 103 is also provided with a removable end cap 105. The end cap 105 may conveniently have printed thereon a trade mark or other information.

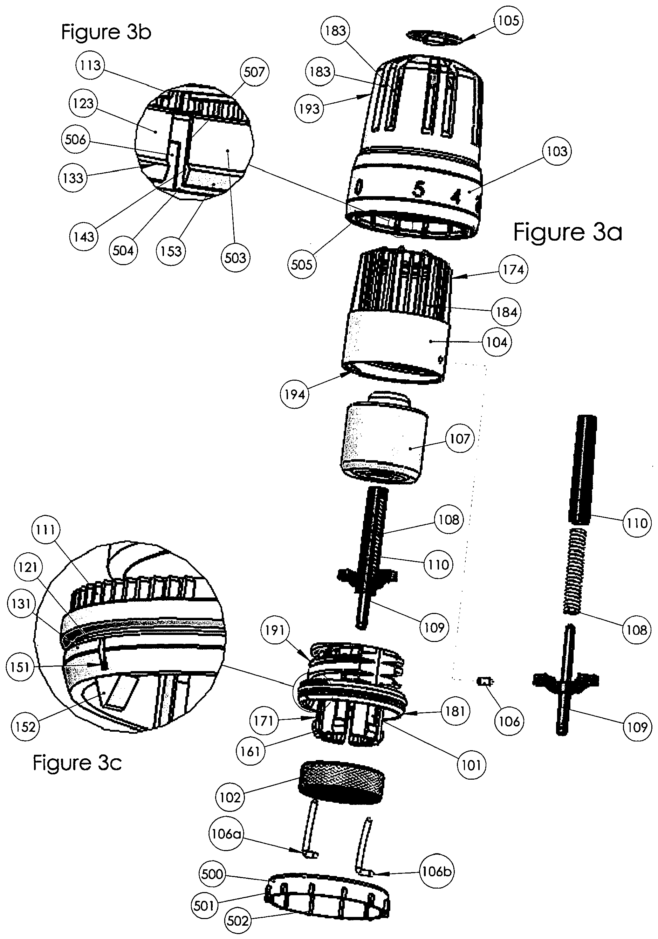

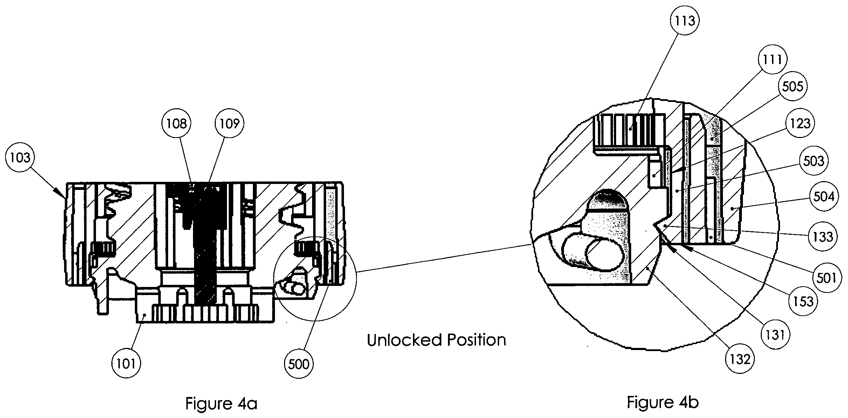

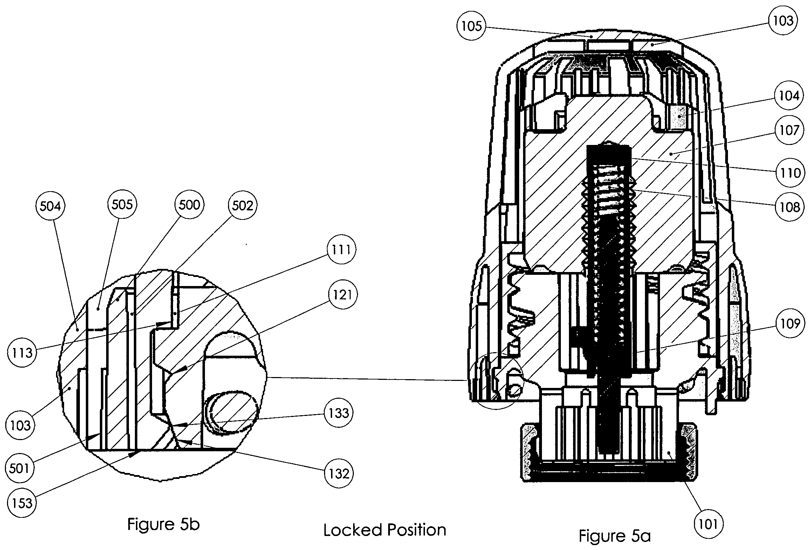

Referring now to Figures 3, 4 and 5, the internal construction of one embodiment of a control head is shown in greater detail. Within housing 103 is contained a coaxially mounted carrier comprising a body 104 and a base 101. The body 104 and base 101 are connected together by means of corresponding screw threads 191 on the outside of the base 101 and 194 on the inside of the body 104.

The carrier base 101 is provided with flanges 161 on a lower projecting section 171. The flanges 161 allow the control head to be secured to the valve by use of a ring fitting 102. The inner surfaces of the flanges 161 are further adapted to engage a nut or corresponding formation provided on the body of said valve and thus prevent rotation of the base 101 with respect to the valve.

As the base 101 is secured so that it does not rotate, rotation of the body 104 about its axis moves the body 104 axially relative to the base 101. Rotation of the body 104 is driven by rotation of the housing 103, cooperating features being provided on the interior surface of the upper portion of the housing 103 and the outer surface of the upper portion of the body 104.

In the embodiment shown, the sensing element 107 comprises a liquid cartridge that provides a change in its axial dimension in response to temperature. Such liquid cartridges are a standard component known in the art. The sensing element 107 is connected to an engaging element 109, which moves axially in response to the change in axial dimension. In use, the end of engaging element 109 is in contact with the operating pin of the flow valve so that axial movement the engaging element 109 causes axial movement of the operating pin of the flow valve and hence opens or closes said flow valve. Typically the flow valve is biased against the engaging element 109 such that movement of the engaging element 109 away from the valve results in the valve opening.

The body 104 is provided with a series of slits 184 on its upper portion 174, these slits 184, in conjunction with the slits 183 provided in housing 103 allow a flow of air between the sensing element 107 and the atmosphere.

The sensing element 107 is mounted on the carrier body 104. As this is the case, rotation of the housing 103 will cause axial movement of the sensing means 107, allowing a user to set the valve to maintain a room at a desired temperature.

A pin 106 is inserted into housing 104 in order to limit axial movement of the sensing means. The pin 106 projects into a slot in thread 191 on the base 101 and travels within the slot in the thread as the base 101 moves with relation to the body 104. Accordingly when a pin 106 encounters either end of the slot, further movement of the body 104 relative to the base 101 is prevented.

A user may insert pins 106a, 106b from below. These pins 106a, 106b obstruct the movement of the pin 106 within the slot in the thread and thus limit the movement of the body 104 relative to the base 101.

A compensator mechanism comprising a spring housing 110 and a spring 108 contained therein is also provided. The compensator mechanism prevents overloading of components within the control head 100.

The housing 103 is movable axially between a raised position relative to the carrier base 101 which is the unlocked position and a lowered position relative to the carrier base 101 which is the locked position. The carrier base 101 and the housing 103, are each provided with co-operating features meaning that in the unlocked position, rotation of the housing 103 rotates the body 104 and hence moves the sensing element 107 axially whilst in the locked position rotation of the housing 103 is prevented. The co-operating features of the housing are provided on an inner wall 503 separated from an outer wall 504 by a gap 505. A series of slots 506 are provided in the outer wall 504. A corresponding series of slits 507 are provided in the inner wall 503. There are twice as many slots 506 provided on the outer wall 504 as there are slits 507 provided on the inner wall 503.

As can be seen in Figure 3b, on the inside of the inner wall 503 of the housing 103 there is provided a plurality of locking teeth 113 provided in a ring extending around the entire inner surface of the housing 103. The teeth 113 each have a substantially triangular profile and are equally spaced around the inner surface of the housing 103.

Below the teeth 113 on the inner surface of the housing 103 is a recessed channel 123, the upper boundary of the channel being provided by the locking teeth 113 and the lower boundary by a projecting lip 133 extending around the entire lower rim 153 of housing 103. The lip 133 has a triangular profile, rising perpendicular to the base of the channel 123 and sloping to the rim 153. A series of slots 143 are also provided, at regular intervals around the rim 153, the slots extending from the rim 153 to the locking teeth 113.

Turning now to Figure 3c, the carrier base 101 is provided with a skirt portion 181 around the projecting portion 171. On the skirt portion 181 are provided one or more series of locking teeth 111. Each of the teeth 113 is of generally triangular profile, and within each series, the teeth 111 are equally spaced, with a spacing corresponding to that of the locking teeth 113 provided on housing 103. The height and width of the profile of the teeth 111 is corresponds to the dimensions of channel 123 provided on housing 103. Below locking teeth 111 is provided a groove 121, said groove 121 having a triangular profile, corresponding to that of the lip 133 provided on housing 103. Below groove 121, the skirt portion extends downwardly to provide a vertical surface 131 and below that slightly inwardly to provide an inward sloping surface 132.

The skirt portion is also provided with a slit 151 and a downwardly extending triangular projection 152. The slit 151 and projection 152 can be aligned, by a user, with reference numerals provided on the outer surface of the housing 103 to provide an indication of the valve position. This enables the user to set the valve to a repeatable and calibrated position if desired.

When the housing 103 is in the unlocked position, lip 133 is positioned adjacent to and fits into groove 121, locking teeth 111 are positioned adjacent to and within channel 123 and locking teeth 113 are positioned adjacent to the smooth lower surface of body 104. This allows the housing 103 to rotate freely with respect to the base 101. When the housing 103 is in the locked position, locking teeth 111 are positioned adjacent to and intermeshed with locking teeth 113, and the lip 123 is position adjacent to inward sloping surface 132. The intermeshing of the locking teeth 111, 113 prevents rotation of the housing 103 and hence prevents movement of the sensing element 107.

When the housing 103 is in the unlocked position, in order to move it to the locked position sufficient downward force must be applied to force the rim 153 of the housing to deform elastically and hence allow the lip 133 to be forced out of groove 121 and over the vertical surface 131 on to a 'snap-fit' against the inward sloping surface 132. Similarly when the housing 103 is moved from the locked position to the unlocked position, a sufficient upward force must be applied to allow the rim 153 to deform elastically and thus allow the lip 133 to move over the inward sloping surface 132 and vertical surface 131 and then 'snap-fit' into groove 121. The elastic deformation of the rim 153 is assisted by the provision of the slots 143.

Greater force is required to move the housing 103 from the locked position to then unlocked position than from the unlocked position to the locked position. This limits the opportunity for the control head to be inadvertently reset.

The dimensions of the various co-operating features are adapted such that the required force to move the housing 103 from the unlocked to the locked position is greater than might be provided by an accidental knock to the housing 103 but not so great that a physically impaired person or an elderly person cannot deliberately move the housing 103 from the unlocked to the locked position.

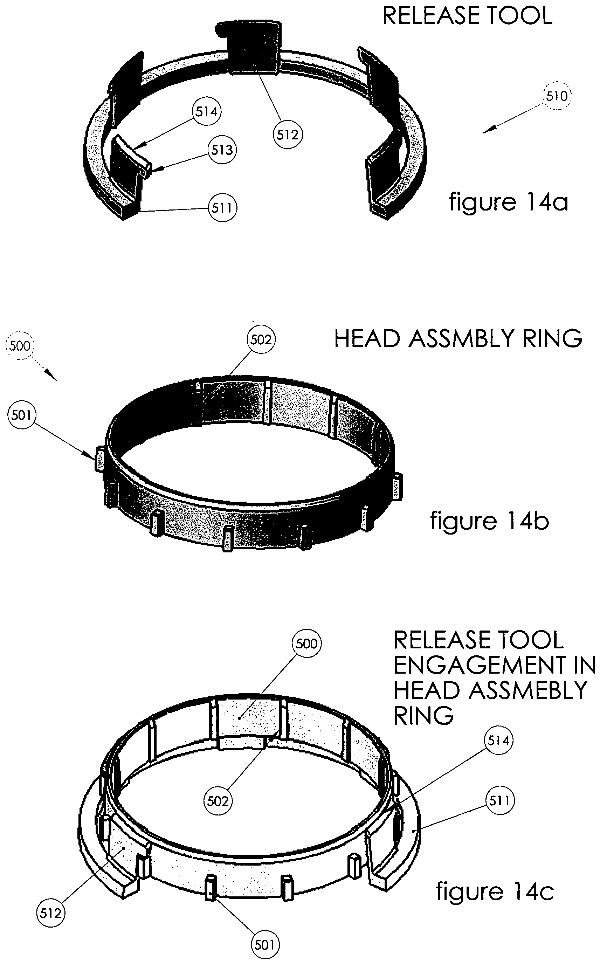

If further security is required, a locking ring 500 may be provided, to retain the housing 103 in a desired position. The locking ring 500 is provided with a plurality of ridge projections 501 on its outer surface and a plurality of correspondingly positioned ridge projections 502 on its inner surface. The ridge projections 501 are of lesser extent than the ridge projections 501, as can be seen more clearly in figure 14b.

The locking ring 500 is inserted into the gap 505. If inserted into the gap in a first position wherein the ridge projections 501, 502 are aligned with the slots 506 and the slits 507, then it is still possible to move the housing 103 between the locked and unlocked positions. Alternatively, if the locking ring 500 is inserted into the gap 505 in a second position such that the projections 501 are aligned with the slots 506 but the projections 502 are not aligned with the slits 507, the engagement of the projections with the inner and outer walls 504, 503 prevents movement of the inner wall 503. This acts to prevent the inner wall 503 deforming and thus prevents the housing 103 from being moved between the locked and unlocked positions.

A tool 510 may be provided for removing the locking ring 500, as is shown in figure 14a. The tool comprises a split ring 511 having a plurality of upstanding hook portions 512. Each hook portion 512 comprises a hooking tab 513 and a bevelled upper edge 514. The bevelled upper edge 514 facilitates the insertion of the split ring between the outer wall 504 and the locking ring 500. Once inserted, the tool 510 can be rotated such that hooking tabs 513 engage the upper ends of the ridge projections 501 as is shown in figure 14c. The tool 510 can then be used to remove the locking ring 500 for re-insertion or otherwise as desired. The tool 510 could also be used to merely rotate the locking ring 500 from the second position to the first such that the control head may be reset.

It is also possible for the entire housing 103 to be removed by use of a suitable tool, which tool 510 (or any other suitable adapted tool) by inserting the tool 510 between the base 101 and the housing 103. In order to achieve this tool 510 is inserted between the base 101 and the housing 103 such that the bevelled edge 514 abuts the lip 133, the user may apply force to deform the rim 153 of the housing elastically and hence allows the lip 133 to pass over the teeth 111 on the base 101. This enables the housing to be readily removed and replaced if necessary or desired. This may be necessary if the housing 103 has become damaged or may be desired if the housing 103 has become unsightly or if it is desired to replace the housing 103 with a housing of an alternative colour or outer appearance.

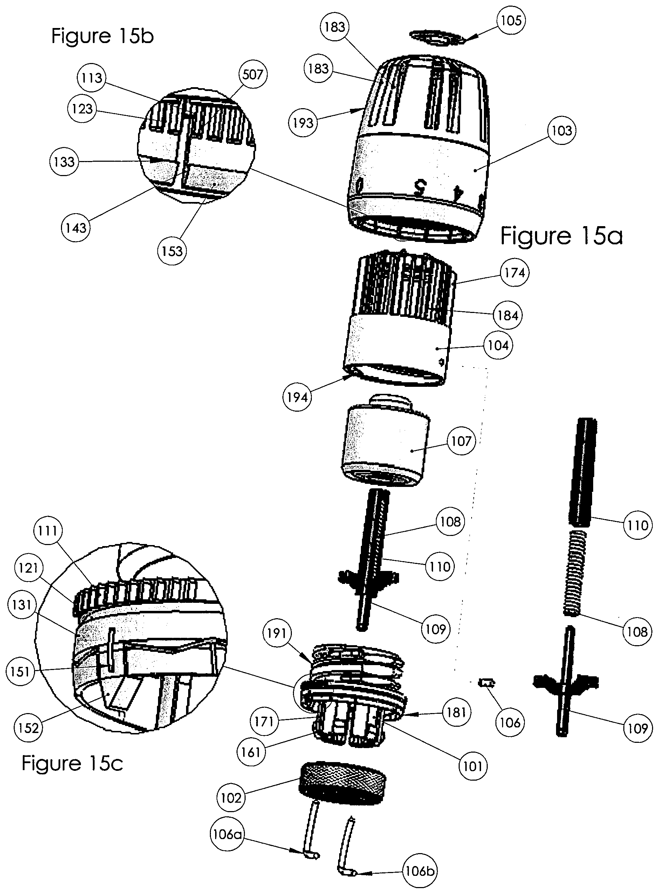

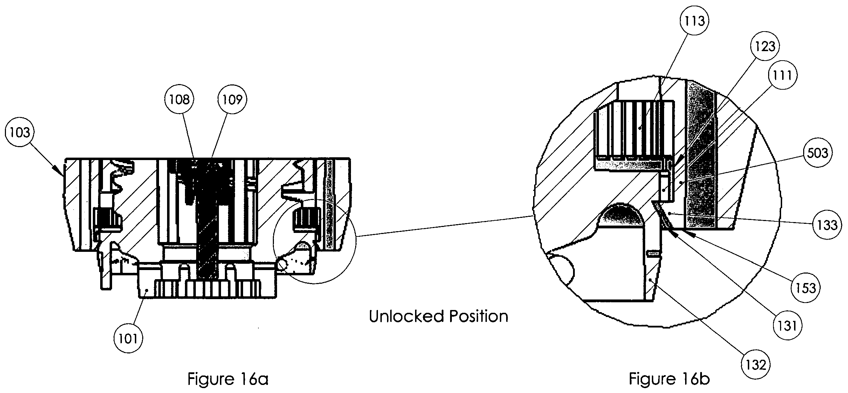

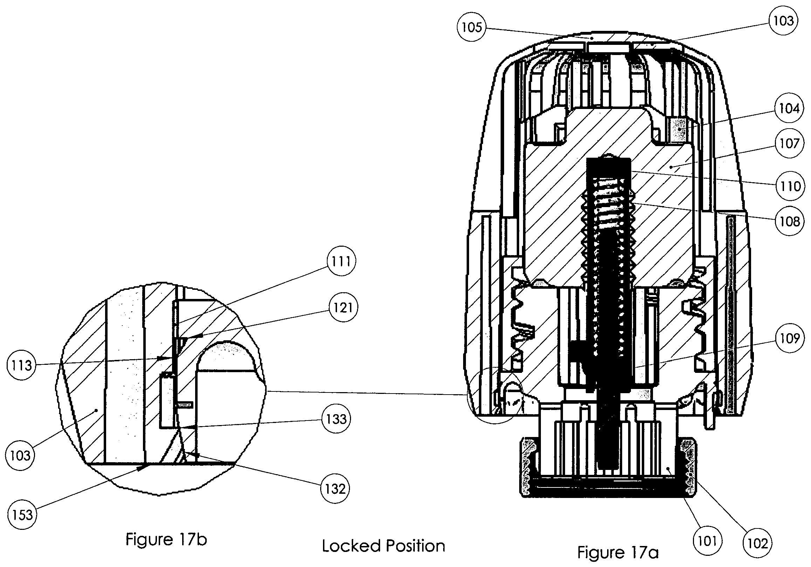

An alternative arrangement for providing security is disclosed in figure 15 to 18. For the sake of clarity all like features are labelled with the same reference numbers. The differences between the embodiment of Figures 15-18 compared with the embodiment of Figure 1-5 lie in the security features provided for retaining the housing 103 in the locked position and in the provision of slots 102a in ring fitting 102 to facilitate the insertion of locking pins 106a, 106b.

The slots 102a are required if the ring fitting 102 has a diameter large enough to cause it to impede the insertion of pins 106a, 106b. If the ring fitting 102 does not have such a large diameter, the slots 102a need not be provided. Such a slotted ring fitting may of course be used with any of the other embodiments of the control head, if required.

In this security arrangement, the housing 103 need not be provided with separate inner and outer walls 503, 504 as the security features are provided on the base 181. In particular, the features comprise inset portions 141 set into the inward sloping surface 132, each inset portion 141 having a jagged upper engaging edge 142.

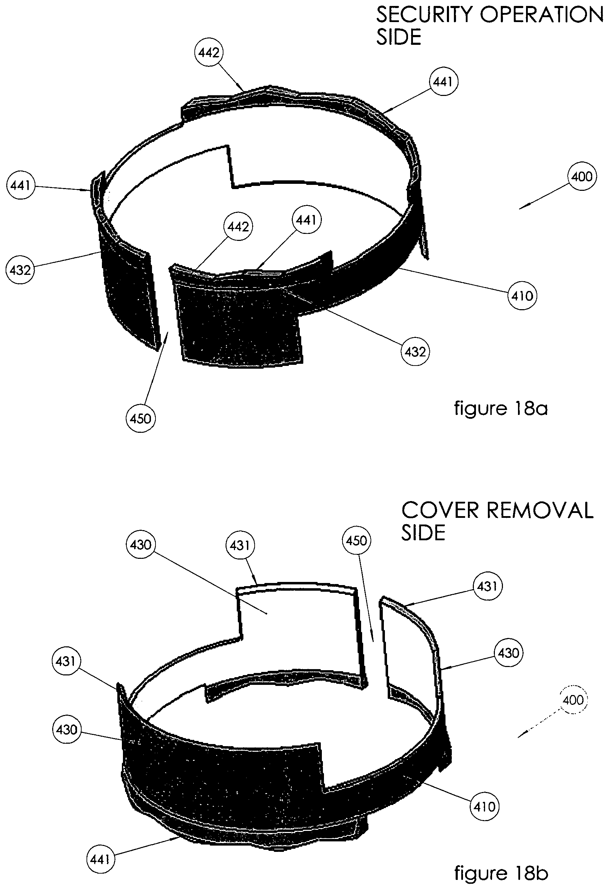

When the engaging edges 142 are revealed for use by the removal of the inset portions, then they provide a strong 'snap fit' with the lip 133, considerable force is required to move the housing from the locked to the unlocked position without the use of a dedicated tool. A suitable dedicated tool 400 is shown in Figure 18. The tool comprises a ring 410 having a split 450. The ring 410 is provided with projecting portions 441 having upper abutting edges 442 corresponding to the shape of the inset portions 141 on the base 101. In use, the user slips the ring 410 under the housing 103 so that the split 450 is aligned with the triangular projection 152 and the projecting portions 441 are aligned with inset portions 141. The user then pushes the ring 410 up so that the abutting edges 442 abut the engaging edges 142. The outer surfaces 432 of the projecting portions 441 match the inward slope of surface 132 and thus when the tool 400 is in this position the lip 133 may be easily slid over surfaces 132 and 432 and subsequently over surface 131 and into groove 121. The tool 400 thus provides a safeguard against inadvertent resetting of the valve or against unauthorised persons resetting the valve.

Similarly, the dimensions of the various co-operating features are adapted such that the required force to move the housing 103 from the locked to the unlocked position using the tool 400 is greater than might be provided by an accidental knock to the housing 103 but not so great that a physically impaired person or an elderly person cannot deliberately move the housing 103 from the locked to the unlocked position using the tool 400. The tool 400 may also be provided with upstanding portions 430 having bevelled edges 431, such that it may be used for insertion between base 101 and housing 103 to facilitate removal of the housing 103.

It is of course possible to provide a housing that can be moved from locked to unlocked without a tool, by not removing the inset portions 141 and hence providing a smoothly sloping surface 132 around the whole of the skirt portion 181. Furthermore, it would be possible to provide a housing incorporating said inset portions 141 and the means for engaging a locking ring 500, if required or if desired.

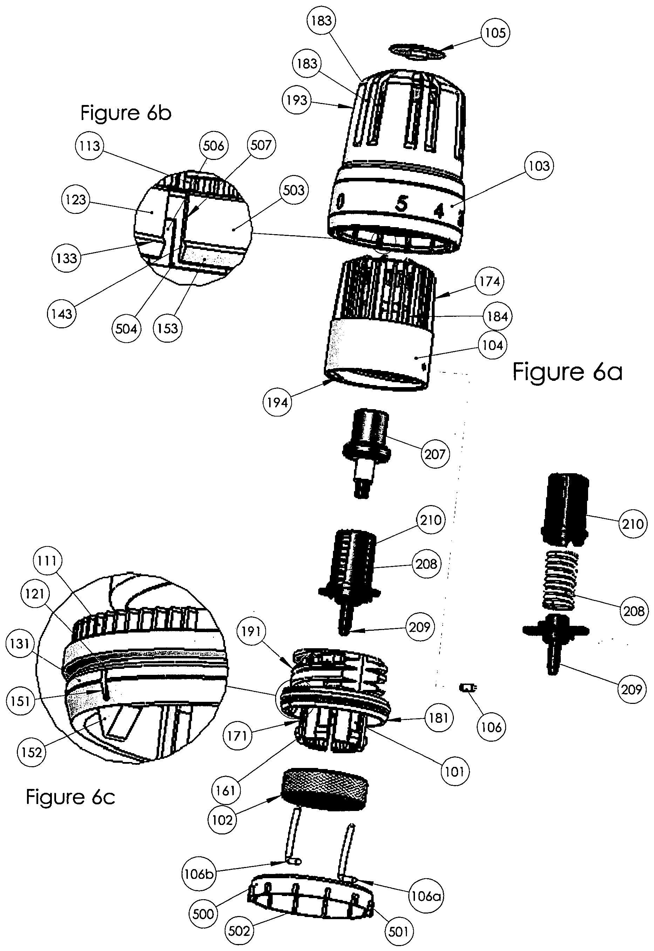

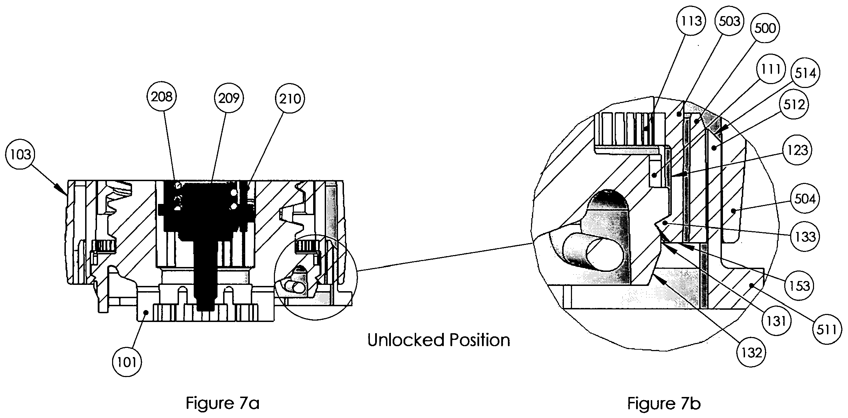

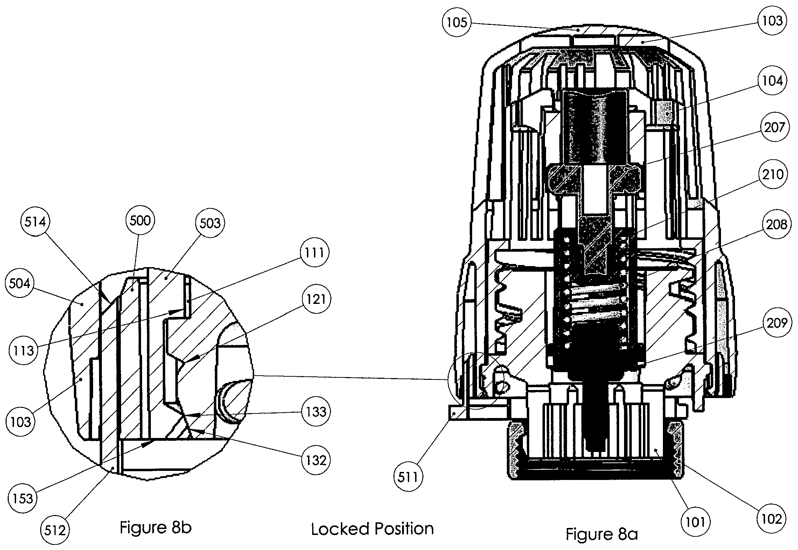

Turning now to Figure 6, 7 and 8 an alternative embodiment of a thermostatic valve is shown. For the sake of clarity all like features are labelled with the same reference numbers. The only difference between the embodiment of Figures 6-8 compared with the embodiment of Figure 1-5 is the composition of the sensing element and compensation mechanism. In the embodiment of Figure 6-8, the sensing element 207 comprises a wax cartridge that provides a change in its axial dimension in response to temperature. Such wax cartridges are a standard component known in the art. The sensing element 207 is connected to an engaging element 209, which moves axially in response to the change in axial dimension. In use, the end of engaging element 209 is in contact with the operating pin of the flow valve so that axial movement the engaging element 209 causes axial movement of the operating pin of the flow valve and hence opens or closes said flow valve. Typically the flow valve is biased against the engaging element 209 such that movement of the engaging element 209 away from the valve results in the valve opening.

The compensator mechanism of the embodiment of Figures 6-8 comprises a spring housing 210 and a spring 208 contained therein. The compensator mechanism prevents overloading of components within the control head 100.

The housing 103 may be moved between the locked and unlocked positions in exactly the same manner as in the previous embodiment. Similarly, the housing 103 of this embodiment may be maintained in position using a locking ring 500 as described above. Additionally or alternatively, the base 181 may be provided with inset portions 141, if required or if desired.

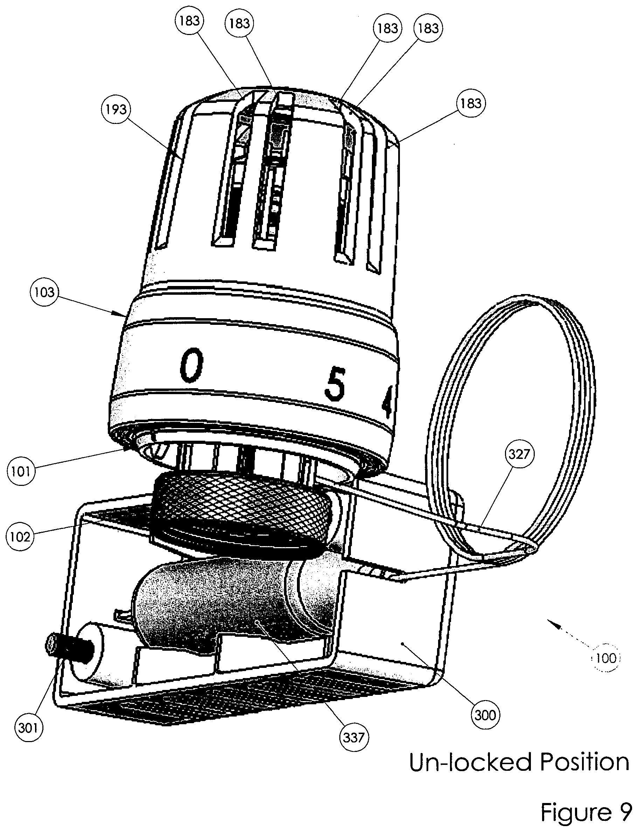

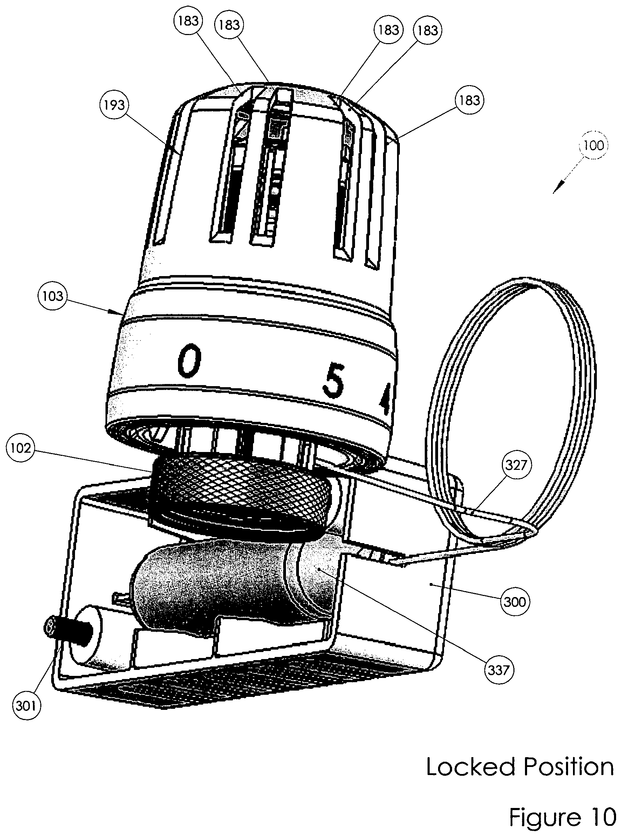

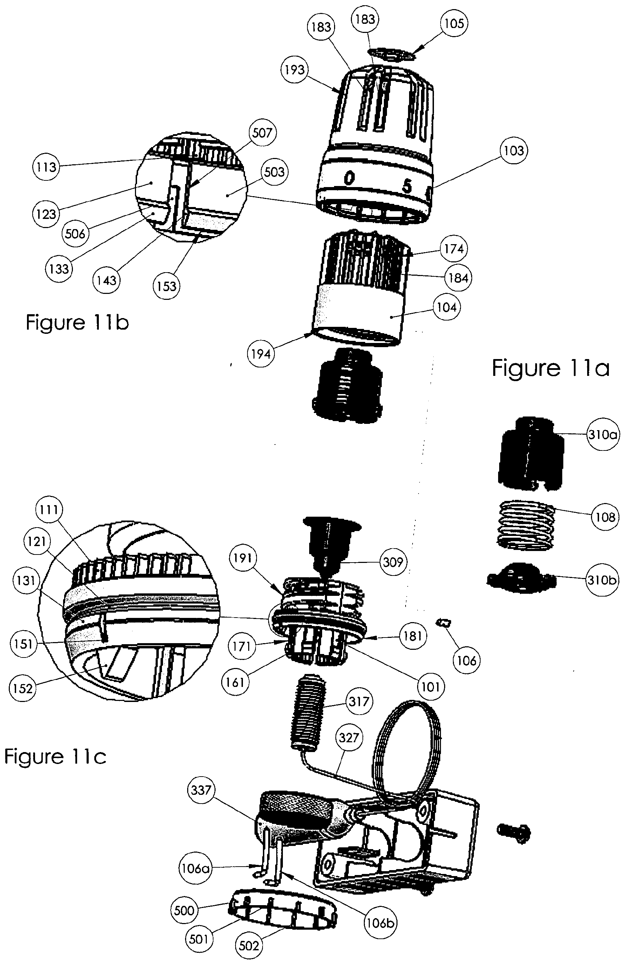

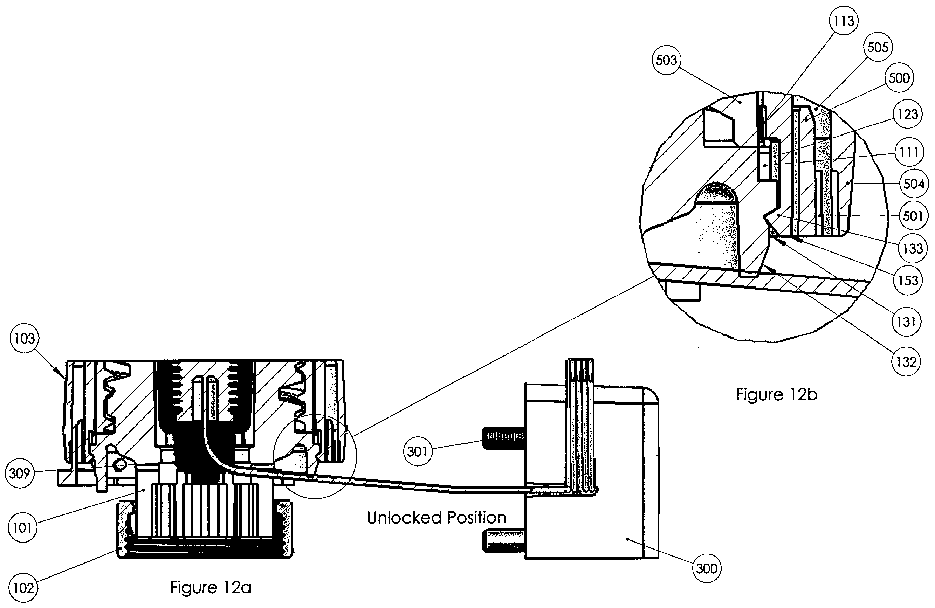

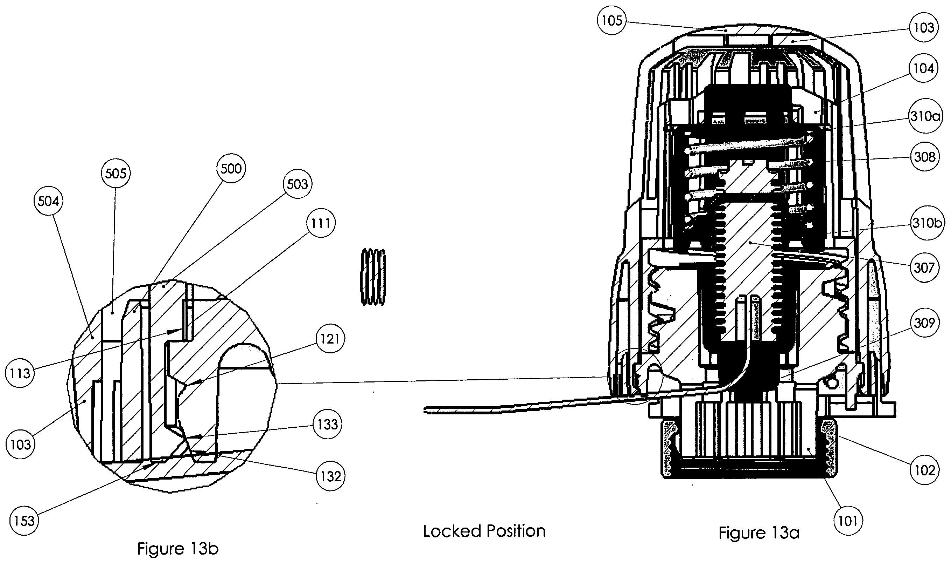

Turning now to Figures 9, 10, 11, 12 and 13, a further alternative embodiment of a control head 100 for a thermostatic valve is shown. For the sake of clarity all like features are labelled with the same reference numbers. Once again the only difference between this embodiment and the earlier embodiments is in the composition of the sensing element and compensation mechanism. In the embodiment of Figures 9-13, the sensing element 207 comprises a bellows that provides a change in its axial dimension in response to temperature. The bellows comprises an expandable chamber 317, in communication with a reservoir 337 via a pipe 327. The chamber 317, pipe 327 and reservoir 337 are all sealed and filled with a suitable liquid. In response to a change in temperature the volume of the liquid changes and hence the pressure in the bellows rises or falls thereby causing the chamber 317 to expand or contract. As the reservoir is significantly greater in volume than the chamber 317 or the pipe 327, changes in the volume of the liquid in the reservoir 337 due to variations in temperature local to the reservoir 337 have a greater effect on the expansion of the chamber 317 than changes in temperature local to the chamber 317. This thus allows the valve to respond to changes in ambient temperature at a location remote from the valve. Such bellows are a standard component known in the art.

The bellows chamber 317 is connected to an engaging element 309, which moves axially in response to the change in axial dimension. In use, the end of engaging element 309 is in contact with the operating pin of the flow valve so that axial movement the engaging element 309 causes axial movement of the operating pin of the flow valve and hence opens or closes said flow valve. Typically the flow valve is biased against the engaging element 309 such that movement of the engaging element 309 away from the valve results in the valve opening.

The compensator mechanism of the embodiment of Figures 9-13 comprises a two part spring housing 310a, 310b and a spring 308 contained therein. The compensator mechanism prevents overloading of components within the control head 100.

The reservoir 337 may be provided within a suitable housing 300, which may be fastened to a wall or other surface by screws 301 or any other suitable fastening means.

The housing 103 may be moved between the locked and unlocked positions in exactly the same manner as in the previous embodiments. Similarly, the housing 103 of this embodiment may be maintained in position using a locking ring 500 as described above. Additionally or alternatively, the base 181 may be provided with inset portions 141, if required or if desired.

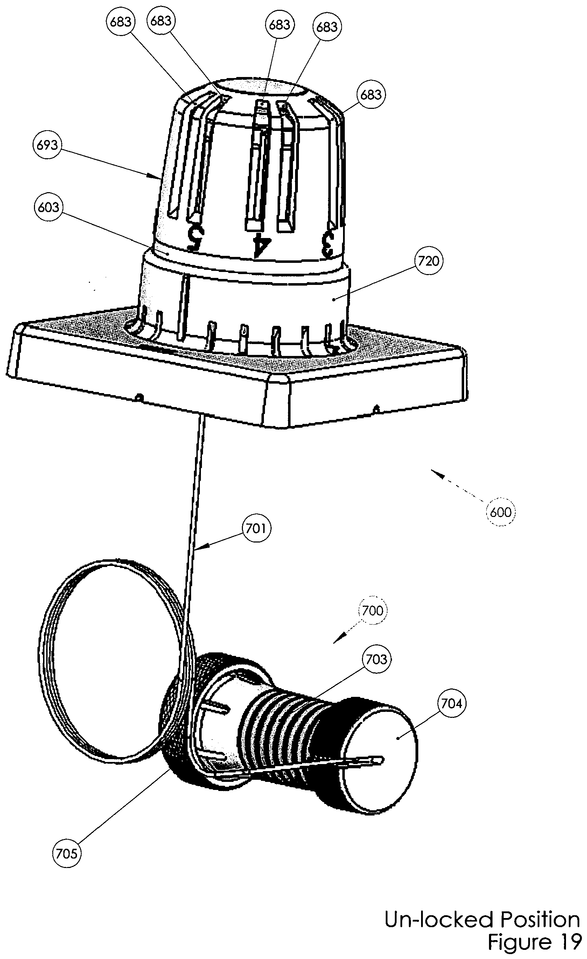

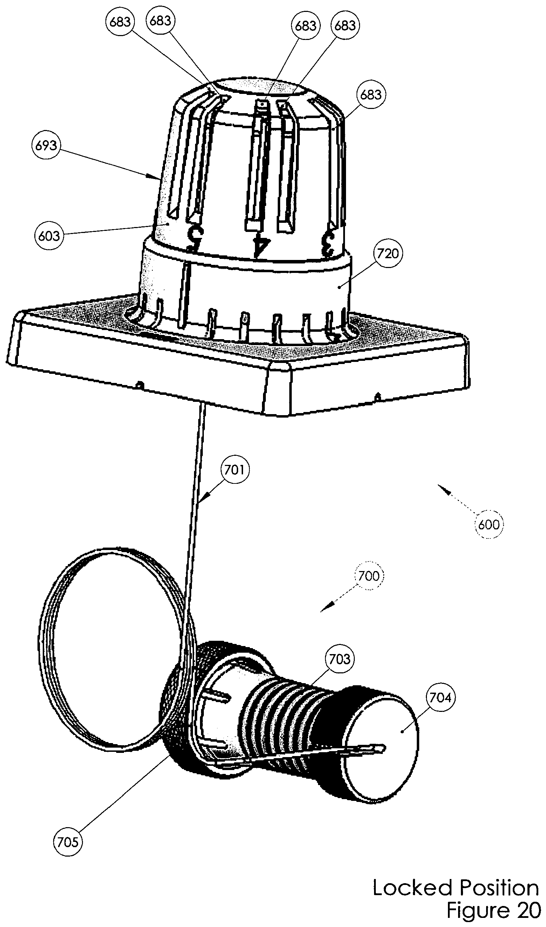

Referring now to Figures 19 and 20, a control head 600 for a flow valve comprises a housing 603 which may be rotated about a central axis A. The housing 603 may be moved axially between an unlocked position shown in Figure 19 and a locked position shown in Figure 20. In the unlocked position, rotation of the housing 603 causes axial movement of the base 601 and associated axial movement of the engaging element 609 of sensing element 607. The axial movement of the engaging element 609 is transferred to the operating pin of the valve via a hydraulic transfer system 700 and thus opens or closes the valve. In the locked position, rotation of the housing 603 is prevented.

The housing is provided with a plurality of slits 683 provided in its upper portion 693. The slits 683 allow a flow of air to reach the sensing element 607. The housing 603 is also provided with a removable end cap 605. The end cap 605 may conveniently have printed thereon a trade mark or other information.

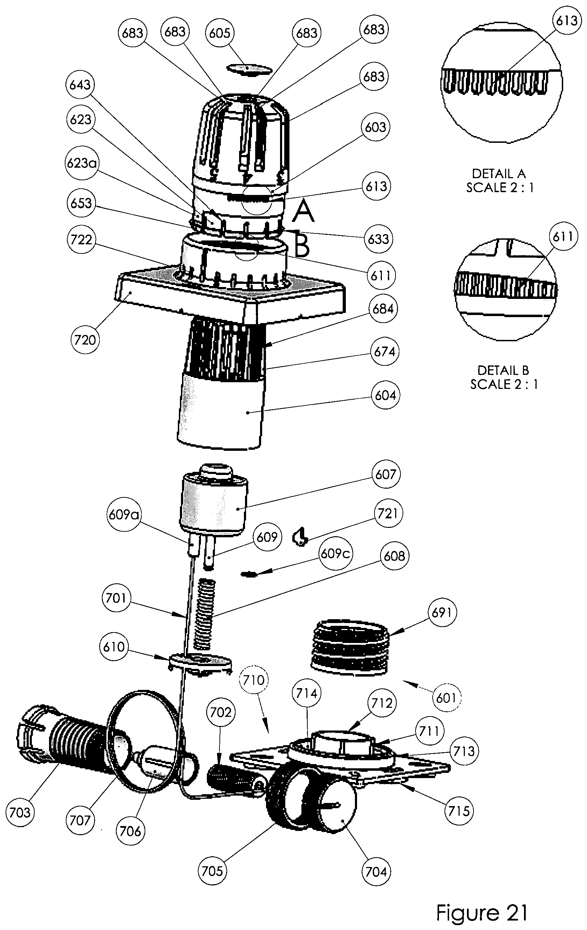

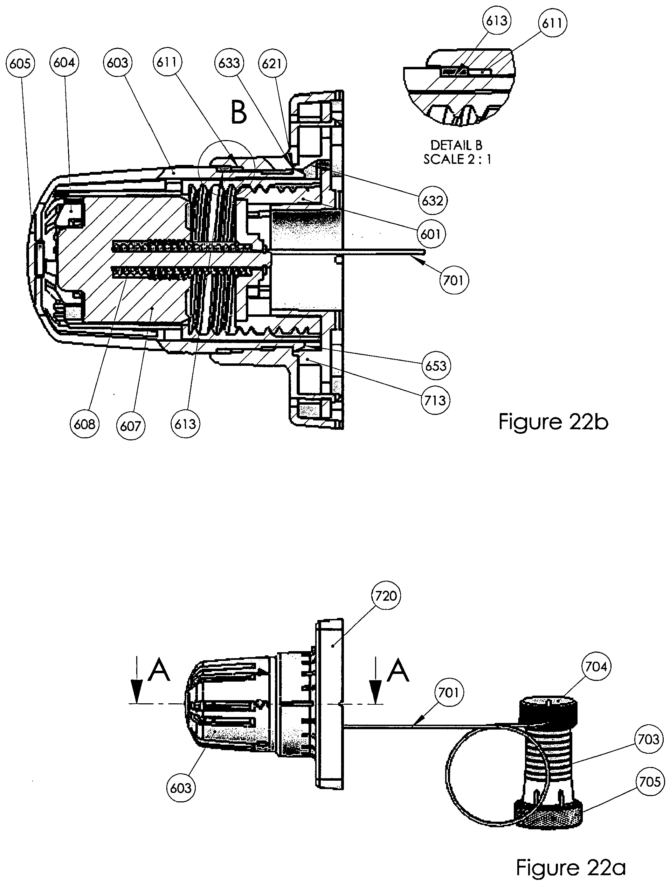

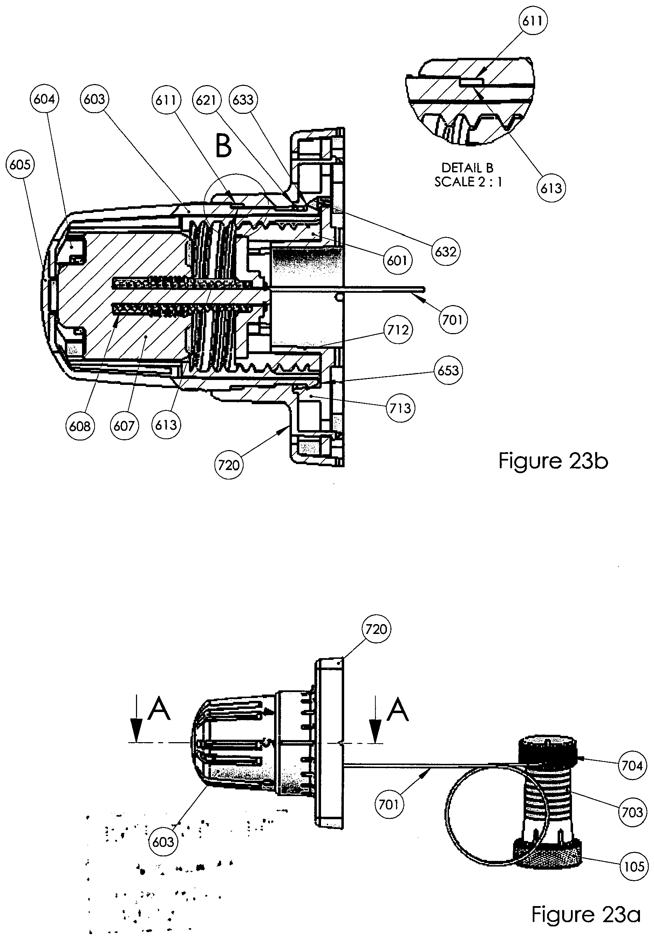

Referring now to Figures 21, 22 and 23, the internal construction of one embodiment of the control head 600 is shown in greater detail. Within housing 603 is contained a coaxially mounted carrier comprising a body 604 and a base 601. The body 604 and base 601 are connected together by means of corresponding screw threads 691 on the outside of the base 601 and 694 on the inside of the body 604.

The carrier base 601 is fitted to a mounting plate 710, the mounting plate being adapted to be affixed to a surface (not shown) by suitable fastening means such as screws, bolts etc. projecting through holes 715. The base 601 sits in a gap 714 between two upstanding rims 712 and 713. On the inner rim 712 are provided one or more projecting ridges 711. The ridges 711 engage with slots 671 provided on the interior of base 601. This secures the base 601 in position relative to the mounting plate 710 and hence the surface. The base 601 is however free to move axially relative to the plate 710.

As the base 601 is secured so that it does not rotate and the body 604 is secured such that it remains substantially stationary axially, rotation of the body 604 about its axis moves the base 601 axially relative to the body 604. Rotation of the body 604 is driven by rotation of the housing 603, cooperating features being provided on the interior surface of the upper portion of the housing 603 and the outer surface of the upper portion of the body 604.

The housing 603 is maintained in position by a housing retaining element 720 which may be connected to the mounting plate 710. In alternative embodiments, either or both of the mounting plate 710 and the housing retaining element 720 may be formed integrally with the base 601.

In the embodiment shown, the sensing element 607 comprises a liquid cartridge filled with a liquid that provides a change in volume in response to temperature. Such liquid cartridges are a standard component known in the art. The sensing element 607 has an engaging element 609, which moves axially in response to the change in volume. In the present embodiment, the liquid in the cartridge 607 is in communication with the hydraulic transfer system 700 via connection 609a. In use, axial movement of engaging element 609 is transferred to the hydraulic system as a result of changes in pressure in the liquid of the sensing element 607. As a result liquid transfers between the sensing element 607 and the hydraulic transfer system 700 such that axial movement the engaging element 609 causes axial movement of the operating pin of the flow valve and hence opens or closes said flow valve. Typically the flow valve is biased against the hydraulic transfer system 700 such that movement of the hydraulic transfer system 700 away from the valve results in the valve opening.

The hydraulic transfer system 700 comprises a pipe 701 which transfers pressure exerted via connection 609a to an expandable bellows 702. The bellows 702 is provided within a sleeve 706 having a pin engaging end 707, the sleeve 706 being free to move axially within a bellows housing comprising a body 703 and an end cap 704. The body 703 is secured to the valve by means of a ring fitting 705 and the end cap 704 is secured to the body 703. When pressure is exerted by movement of the engaging element 609, it causes bellows 702 to expand. This expansion is constrained in one direction by end cap 704 but in the other direction causes pin engaging end 707 of sleeve 706 to be urged into engagement with the operating pin of the valve.

The body 604 is provided with a series of slits 684 on its upper portion 674, these slits 684, in conjunction with the slits 683 provided in housing 603 allow a flow of air between the sensing element 607 and the atmosphere.

The sensing element 607 is mounted in the carrier body 604. As this is the case, rotation of the housing 603 will cause axial movement of the engaging element 609, allowing a user to set the valve to maintain a room at a desired temperature.

A compensator mechanism comprising a spring retaining plate 610 and a spring 608 contained therein is also provided. The compensator mechanism prevents overloading of components within the control head 600. The spring 608 is held on and in contact with the base of 609 by plate 610 and a C-clip 608c. Movement of engaging element 609 is caused by movement of the spring plate 610 acting against the spring 608. If it is not be possible for engaging element 609 to be displaced because the bellows 702 have lengthened as far as the valve mechanism will permit then the spring 608 compresses and the spring plate slides 610 up engaging element 609 against the spring pressure. Similarly when the liquid in the hydraulic transfer system 700 expands due to temperature rise, if the bellows 702 has reached maximum permitted expansion then the engaging element 609 is driven out of the cartridge 607 and the spring 608 becomes compressed. In this design the capsule 607 remains largely stationary so that the capillary tube 701 does not have to flex. All the moving is done by the engaging element 609, the spring 608, the spring plate 610 and the threaded section 691 of the base 601 to which the spring plate 610 is firmly clipped. Hence the plate 610 moves axially with the base 601. To accommodate this, the threaded portion 691 slides axially on the base plate 710, if required.

The housing 603 is movable axially between a raised position relative to the mounting plate 710 which is the unlocked position and a lowered position relative to the mounting plate 710 which is the locked position. In this particular embodiment, the mounting plate 710 and the housing retaining element 720 in combination provide co-operating features for the housing 603 meaning that in the unlocked position, rotation of the housing 603 rotates the body 604 and hence moves the sensing element 607 axially whilst in the locked position rotation of the housing 603 is prevented.

As can be seen in Figure 21, on the outside of the housing 603 there is provided a plurality of locking teeth 613 extending around part of surface of the housing 603. The teeth 613 each have a substantially triangular profile and are equally spaced around the inner surface of the housing 603.

Below the teeth 613 on the outer surface of the housing 603 is a recessed channel 623, the upper boundary of the channel 623 being provided by the locking teeth 613 and the lower boundary by a projecting lip 633 extending around the lower rim 653 of housing 603. The lip 633 has a triangular profile, rising perpendicular to the base of the channel 623 and sloping to the rim 653. A series of slits 643 are also provided, at regular intervals around the rim 653.

The housing retaining element 720 is provided with a plurality of locking teeth 611 around its inner surface. Above the locking teeth 611 is a wider section 641 of the housing retaining element 720. Each of the teeth 611 is of generally triangular profile, the teeth 611 are equally spaced, with a spacing corresponding to that of the locking teeth 613 provided on housing 603. The height and width of the profile of the teeth 613 on the housing 603 corresponds to the dimensions of wider section 621 of the housing retaining element 720. Below locking teeth 611 is provided a lip 621, said lip 621 having a square profile. The lip 621 acts to prevent lip 633 from being pulled up over it and thus retains the housing 603 within the housing retaining element 720. Below lip 621, the outer rim 713 of the mounting plate 710 abuts the housing retaining element 720. The inner surface of the outer rim extends downwardly to provide a vertical surface 631 and below that slightly inwardly to provide an outward sloping surface 632.

When the housing 603 is in the unlocked position, lip 633 is positioned adjacent to lip 621, locking teeth 611 are positioned adjacent to and within channel 623 and locking teeth 613 are positioned adjacent to the wider portion 641. This allows the housing 603 to rotate freely with respect to the base 601. When the housing 603 is in the locked position, locking teeth 611 are positioned adjacent to and intermeshed with locking teeth 613, and the lip 623 is positioned adjacent to inward sloping surface 632. The intermeshing of the locking teeth 611, 613 prevents rotation of the housing 603 and hence prevents movement of the engaging element 609.

When the housing 603 is in the unlocked position, in order to move it to the locked position sufficient downward force must be applied to force the rim 653 of the housing to deform elastically and hence allow the lip 633 to be forced away from lip 621 and over the vertical surface 631 on to a 'snap-fit' against the outward sloping surface 632. Similarly when the housing 603 is moved from the locked position to the unlocked position, a sufficient upward force must be applied to allow the rim 653 to deform elastically and thus allow the lip 633 to move over the vertical surface 631 and then abut lip 621. The elastic deformation of the rim 653 is assisted by the provision of the slots 643.

Greater force is required to move the housing 603 from the locked position to then unlocked position than from the unlocked position to the locked position. This limits the opportunity for the control head to be inadvertently reset.

The dimensions of the various co-operating features are adapted such that the required force to move the housing 603 from the unlocked to the locked position is greater than might be provided by an accidental knock to the housing 603 but not so great that a physically impaired person or an elderly person cannot deliberately move the housing 603 from the unlocked to the locked position.

When in the unlocked position, range limiting means may be provided to restrict movement of housing 603 and hence restrict the permitted movement of the operating pin of the valve. The range limiting means may comprise range limiting elements 721, which may be inserted into slits 722 in the housing retaining element 720. The range limiting elements project into channel 623 on the housing 603. As the housing 603 rotates, they eventually engage with one or more raised portions 623a provided in the channel 623. This engagement between the range limiting element 721 and the raised portions 623a prevents further rotation of the housing 603 in a particular direction. One such element 721 can therefore be used to define an upper or lower limit to operation of the valve and two such elements 721 can be used to define a permitted range.

In this explanation, the terms above and below, raised and lowered have been used to refer to relative positions of individual features on the invention. These terms have been used for convenience and clarity of explanation and should not be interpreted as limitations if the invention is put together or used in a different orientation to that shown in the drawings. In particular, the surface mounted embodiment of figure 19-23 is primarily envisaged as being mounted on a vertical wall and as such references to raised and lowered should be understood to mean movements along an axis perpendicular to the plane of the wall.

It is of course to be understood that the invention is not intended to be limited to the details of the above embodiments which are described by way of example only.

## Claims

1. A control head (100, 600) for a flow valve, the control head (100, 600) comprising: a housing (103, 603) and an engaging element (109, 609), the engaging element (109, 609) adapted to engage an operating pin of a flow valve and the housing (103, 603) being rotatable about an axis to cause axial movement of said engaging element (109, 609), **characterised in that** said housing (103, 603) is movable between an unlocked position whereby the housing (103, 603) can rotate about its axis, and a locked position whereby the housing (103, 603) cannot rotate about its axis, and wherein the movement of the housing (103, 603) between said locked and unlocked positions is an axial movement.

2. A control head (100, 600) as claimed in claim 1 or claim 2 wherein the flow valve is a flow valve of the type having an operating pin projecting from the body (104, 604) of the valve against a biasing force, the flow through the valve being restricted when the operating pin is urged into the body (104, 604) of the valve.

3. A control head (100, 600) as claimed in any preceding claim wherein the engaging element (109, 609) is connected to a sensing element (107, 207, 307, 607), which undergoes linear expansion in response to a change in ambient temperature and is thus operable to move the engaging element (109, 609) in response to a change in ambient temperature.

4. A control head (100, 600) as claimed in claim 3 wherein the sensing element (107, 207, 307, 607) is mounted within the housing (103, 603) such that its linear expansion takes place axially and the engaging element (109, 609) is thus moved axially.

5. A control head (100, 600) as claimed in claim 4 wherein the sensing element (107, 207, 307, 607) is embodied by a liquid or wax cartridge (107, 207).

6. A control head (100, 600) as claimed in claim 5 wherein the sensing element (107, 207, 307, 607) comprises a bellows (307) having an expandable chamber connected to the engaging element (109, 609) and a remotely located reservoir in communication therewith.

7. A control head (100, 600) as claimed in any one of claims 4 to 6 wherein a compensation mechanism is provided to connect the sensing element (107, 207, 307, 607) to the engaging element (109, 609), the compensation mechanism comprising a spring housing (110, 210, 310, 610) and a spring (108, 208, 308, 608) contained therein.

8. A control head (100, 600) as claimed in any one of claims 4 to 7 wherein a carrier is provided within the housing (103, 603), the sensing element (107, 207, 307, 607) being disposed within the carrier and the engaging element (109, 609) projecting from the carrier.

9. A control head (100, 600) as claimed in claim 8 wherein the carrier comprises a base (101, 601) and a body (104, 604) and wherein the body (104, 604) and the base (101, 601) are movable relative to one another in a direction parallel to the axis of the housing (103, 603).

10. A control head (100, 600) as claimed in claim 9 wherein the housing (103, 603) and the base (101, 601) are adapted such that the housing (103, 603) 'snap fits' in the locked and unlocked positions, the 'snap fit' achieved by the provision of a projecting lip (133) on one of the housing (103, 603) or the base (101, 601) and complementary formations on the other of the housing (103, 603) or the base (101, 601).

11. A control head (100, 600) as claimed in claim 10 wherein the base (101, 601) is mounted on the valve so that it does not rotate with respect to the valve and the body (104, 604) is adapted to co-rotate with the housing (103, 603) and wherein rotation of the housing (103, 603) thus causes axial movement of the body (104, 604) relative to the base (101, 601).

12. A control head (100, 600) as claimed in claim 11 wherein the sensing element (107, 207, 307, 607) is mounted on the body (104, 604) and thus is moved axially by rotation of the housing (103, 603).

13. A control head (100, 600) as claimed in claim 12 wherein the base (101, 601) and the housing (103, 603) are provided with co-operating features allowing the housing (103, 603) to be retained in and to move between the locked and unlocked positions.

14. A control head (100, 600) as claimed in claim 13 wherein the co-operating features comprise sets of locking teeth (111, 113) provided on the housing (103, 603) and on the base (101, 601), which intermesh when the housing (103, 603) is in the locked position preventing rotation of the housing (103, 603) and which do not intermesh when the housing (103, 603) is in the unlocked position thereby allowing rotation of the housing (103, 603).

15. A control head (100, 600) as claimed in claim 14 wherein the complementary formation for 'snap fit' in the locked position is a substantially smoothly sloping indented formation (132).

16. A control head (100, 600) as claimed in any one of claims 11 to 15 wherein the housing (103, 603) comprises inner and outer walls (503, 504) separated from each other by a gap which does not extend the full height of the housing (103, 603) and wherein the co-operating features of the housing (103, 603) and the snap fitting features of the housing (103, 603) are provided on the inner wall (503) of the housing (103, 603).

17. A control head (100, 600) as claimed in claim 16 wherein the gap between the inner and outer walls (503, 504) is adapted to receive a locking ring (500), the locking ring (500) being operable in a first position, to allow movement of the housing (103, 603) between the locked and unlocked positions and in a second position, to prevent movement of the housing (103, 603) between the locked and unlocked positions.

18. A control head (100, 600) as claimed in claim 17 wherein the locking ring (500) may comprise a ring having a series of ridge projections (501, 502) on its inner and outer surfaces, the ridge projections (501, 502) provided at corresponding positions on the inner and outer surfaces of the ring (500).

19. A control head (100, 600) as claimed in claim 18 wherein the inner wall (503) of the housing (103, 603) is provided with a series of slits (507) corresponding to the ridge projections (502) of the inner surface of the locking ring (500) and the outer wall (504) of the housing (103, 603) is provided with a series of slots (506) corresponding to the ridge projections (501) of the outer surface of the locking ring (500), there being twice as many slots (506) on the outer wall (504) as slits (507) on the inner wall (503).

20. A control head (100, 600) as claimed in claim 19 wherein the first position of the locking ring (500) corresponds to the ridge projections (501) of the locking ring (500) being aligned with the slots (506) of the outer wall (504) and the slits (507) of the inner wall (503) and the second position of the locking ring (500) corresponds to the outer ridge projections (501) of the locking ring (500) being aligned with the slots (506) of the outer wall (504) but the inner ridge projections of the locking ring (500) not being aligned with the slits (507) of the inner wall (503).

21. A control head (100, 600) as claimed in any one of claims 18 to 20 wherein the locking ring (500) may be removed and/or repositioned by means of a suitable tool comprising a split ring (511) having one or more upstanding hook portions (512) adapted to be inserted into the gap between the outer surface of the locking ring (500) and the outer wall (504) of the housing (103, 603) so as to engage the ridge projections on the outer surface of the locking ring (500) with hooking tabs (513) projecting from the sides of the hook portions (512).

22. A control head (100, 600) as claimed in claim 21 wherein the hook portions (512) are provided with bevelled upper edges (514) to facilitate insertion between the looking ring and the outer wall (504).

23. A control head (100, 600) as claimed in any one of claims 11 to 22 wherein the complementary formation for 'snap fit' in the locked position is adapted to provide an engaging edge (142), the edge (142) adapted such that a dedicated tool (400) is required to move the lip (133) past the edge from the locked position into the unlocked position.

24. A control head (100, 600) as claimed in claim 23 wherein the complementary formation for 'snap fit' in the locked position is modifiable to provide the engaging edge.

25. A control head (100, 600) as claimed in claim 23 or 24 wherein the dedicated tool (400) comprises a split ring (410) provided with a smoothly sloping surface (432) terminating in an abutting edge (442) complementary to the engaging edge and adapted to abut the engaging edge (142).

26. A control head (100, 600) as claimed in any one of claims 9 to 25 wherein a multiplicity of slits (183, 683) are formed in the housing (103, 603) adjacent the sensing element (107, 207, 307, 607) and further slits (184, 684) are provided in the body (104, 604) whereby a flow of air through the housing (103, 603) can be established either in an axial direction or in a direction transverse to the axis.

27. A control head (100, 600) as claimed in any one of claims 9 to 26 wherein at least one locking means is provided whereby the range of movement of the body (104, 604) may be limited to a predefined maximum and/or minimum.

28. A control head (100, 600) as claimed in claim 28 wherein said locking means comprises one or more pins (106).

29. A control head (600) as claimed in any preceding claim wherein the housing (603) is removable from the control head (600) by use of a tool (400) comprising a split ring (410) and provided with upstanding portions (441) having a bevelled edge (442).

30. A control head (600) as claimed in any one of claims 1 to 10 wherein the control head (600) is mounted apart from the valve, on a surface, and is connected to the valve via a hydraulic transfer system (700) operable to transfer movement of the engaging element (609) to the operating pin of the valve.

31. A control head (600) as claimed in claim 30 wherein the base (601) is mounted on the surface such that it does not rotate with respect to the surface and the body (604) is adapted to co-rotate with the housing (603) and wherein rotation of the housing (603) thus causes axial movement of the body (604) relative to the base (601).

32. A control head (600) as claimed in claim 31 wherein the sensing element (607) is mounted in the body such that the engaging element (609) moves axially in response to rotation of the housing but the sensing element (609) substantially does not move axially in response to rotation of the housing (603).

33. A control head (600) as claimed in any one of claims 30 to 32 wherein the base (607) is mounted to the surface via a mounting plate (710) and the mounting plate (710) is further adapted to secure housing retaining means (720) to the surface such that the housing retaining means (720) do not rotate relative to the surface.

34. A control head (600) as claimed in claim 33 wherein the housing (603) and the housing retaining element (720) are provided with co-operating features allowing the housing (603) to be retained in and to move between the locked and unlocked positions.

35. A control head (600) as claimed in claim 34 wherein sets of locking teeth (611, 613) are provided on the housing (603) and on the housing retaining element (720), which intermesh when the housing (603) is in the locked position preventing rotation of the housing (603) and which do not intermesh when the housing (603) is in the unlocked position thereby allowing rotation of the housing (603).

36. A flow valve incorporating a control head (100, 600) as claimed in any one of claims 1 to 29.

37. A flow valve as claimed in claim 36 wherein said flow valve is a thermostatic flow valve for regulating the supply of water to a radiator.

## Patentansprüche

1. Regelkopf (100, 600) für ein Durchflussventil, wobei der Regelkopf (100, 600) aufweist: ein Gehäuse (103, 603) und ein Eingriffselement (109, 609), wobei das Eingriffselement (109, 609) ausgebildet ist, um einen Betätigungsstift eines Durchflussventils in Eingriff zu nehmen, und wobei das Gehäuse (103, 603) drehbar um eine Achse ist, um eine axiale Bewegung des Eingriffselements (109, 609) zu bewirken,
**dadurch gekennzeichnet, dass**
das Gehäuse (103, 603) zwischen einer entriegelten Stellung, bei der sich das Gehäuse (103, 603) um seine Achse drehen kann, und einer verriegelten Stellung, bei der sich das Gehäuse (103, 603) nicht um seine Achse drehen kann, beweglich ist und wobei die Bewegung des Gehäuses (103, 603) zwischen der verriegelten und entriegelten Stellung eine axiale Bewegung ist.

2. Regelkopf (100, 600) nach Anspruch 1 oder 2,
wobei das Durchflussventil ein Durchflussventil des Typs ist, welcher einen Betätigungsstift hat, der von dem Körper (104, 604) des Ventils gegen eine Rückstellkraft vorsteht, wobei der Durchfluss durch das Ventil eingeschränkt ist, wenn der Betätigungsstift in den Körper (104, 604) des Ventils gedrängt wird.

3. Regelkopf (100, 600) nach einem der vorherigen Ansprüche,
wobei das Eingriffselement (109, 609) mit einem Erfassungselement (107, 207, 307, 607) verbunden ist, welches eine lineare Ausdehnung in Reaktion auf eine Änderung der Umgebungstemperatur erfährt, und somit betreibbar ist, um das Eingriffselement (109, 609) in Reaktion auf eine Änderung der Umgebungstemperatur zu bewegen.

4. Regelkopf (100, 600) nach Anspruch 3,
wobei das Erfassungselement (107, 207, 307, 607) derart in dem Gehäuse (103, 603) angebracht ist, dass seine lineare Ausdehnung axial stattfindet und das Eingriffselement (109, 609) dadurch axial bewegt wird.

5. Regelkopf (100, 600) nach Anspruch 4,
wobei das Erfassungselement (107, 207, 307, 607) durch eine Flüssigkeits- oder Wachskartusche (107, 207) verkörpert ist.

6. Regelkopf (100, 600) nach Anspruch 5,
wobei das Erfassungselement (107, 207, 307, 607) einen Balg (307) aufweist, welcher eine mit dem Eingriffselement (109, 609) verbundene, ausdehnbare Kammer und ein sich entfernt befindendes Reservoir hat, das mit ihm im Austausch ist.

7. Regelkopf (100, 600) nach einem der Ansprüche 4 bis 6,
wobei ein Ausgleichsmechanismus vorgesehen ist, um das Erfassungselement (107, 207, 307, 607) mit dem Eingriffselement (109, 609) zu verbinden, wobei der Ausgleichsmechanismus ein Federgehäuse (110, 210, 310, 610) und eine darin enthaltene Feder (108, 208, 308, 608) aufweist.

8. Regelkopf (100, 600) nach einem der Ansprüche 4 bis 7,
wobei ein Träger in dem Gehäuse (103, 603) vorgesehen ist, wobei das Erfassungselement (107, 207, 307, 607) in dem Träger angeordnet ist und das Eingriffselement (109, 609) von dem Träger vorsteht.

9. Regelkopf (100, 600) nach Anspruch 8,
wobei der Träger eine Basis (101, 601) und einen Körper (104, 604) aufweist und wobei der Körper (104, 604) und die Basis (101, 601) relativ zueinander in einer Richtung parallel zu der Achse des Gehäuses (103, 603) beweglich sind.

10. Regelkopf (100, 600) nach Anspruch 9,
wobei das Gehäuse (103, 603) und die Basis (101, 601) derart ausgebildet sind, dass das Gehäuse (103, 603) in der verriegelten und entriegelten Stellung "schnappsitzt", wobei der "Schnappsitz" durch das Vorsehen einer vorstehenden Lippe (133) entweder auf dem Gehäuse (103, 603) oder der Basis (101, 601) und komplementären Gebilden auf dem anderen von diesen erzielt wird.

11. Regelkopf (100, 600) nach Anspruch 10,
wobei die Basis (101, 601) so auf dem Ventil angebracht ist, dass sie sich nicht bezüglich des Ventils dreht, und wobei der Körper (104, 604) ausgebildet ist, um sich mit dem Gehäuse (103, 603) mitzudrehen, und wobei eine Drehung des Gehäuses (103, 603) dadurch eine axiale Bewegung des Körpers (104, 604) relativ zu der Basis (101, 601) bewirkt.

12. Regelkopf (100, 600) nach Anspruch 11,
wobei das Erfassungselement (107, 207, 307, 607) auf dem Körper (104, 604) angebracht ist und somit durch eine Drehung des Gehäuses (103, 603) axial bewegt wird.

13. Regelkopf (100, 600) nach Anspruch 12,
wobei die Basis (101, 601) und das Gehäuse (103, 603) mit zusammenarbeitenden Bestandteilen versehen sind, welche es ermöglichen, dass das Gehäuse (103, 603) in der verriegelten und entriegelten Stellung gehalten wird und zwischen diesen bewegt wird.

14. Regelkopf (100, 600) nach Anspruch 13,
wobei die zusammenarbeitenden Bestandteile eine Reihe von Verriegelungszähnen (111, 113) aufweisen, welche auf dem Gehäuse (103, 603) und auf der Basis (101, 601) vorgesehen sind, die sich verzahnen, wenn das Gehäuse (103, 603) in der verriegelten Stellung ist, welche eine Drehung des Gehäuses (103, 603) verhindert, und die sich nicht verzahnen, wenn das Gehäuse (103, 603) in der entriegelten Stellung ist, wodurch eine Drehung des Gehäuses (101, 603) ermöglicht ist.

15. Regelkopf (100, 600) nach Anspruch 14,
wobei das komplementäre Gebilde für den "Schnappsitz" in der verriegelten Stellung ein im Wesentlichen flach abfallendes eingekerbtes Gebilde (132) ist.

16. Regelkopf (100, 600) nach einem der Ansprüche 11 bis 15,
wobei das Gehäuse (103, 603) eine Innen- und Außenwand (503, 504) aufweist, die voneinander durch einen Spalt getrennt sind, welcher sich nicht über die gesamte Höhe des Gehäuses (103, 603) erstreckt, und wobei die zusammenarbeitenden Bestandteile des Gehäuses (103, 603) und die Schnappsitzbestandteile des Gehäuses (103, 603) auf der Innenwand (503) des Gehäuses (103, 603) vorgesehen sind.

17. Regelkopf (100, 600) nach Anspruch 16,
wobei der Spalt zwischen der Innen- und Außenwand (503, 504) ausgebildet ist, um einen Verriegelungsring (500) aufzunehmen, wobei der Verriegelungsring (500) in eine erste Stellung, um eine Bewegung des Gehäuses (103, 603) zwischen der verriegelten und entriegelten Stellung zu ermöglichen, und in eine zweite Stellung betätigbar ist, um eine Bewegung des Gehäuses (103, 603) zwischen der verriegelten und entriegelten Stellung zu verhindern.

18. Regelkopf (100, 600) nach Anspruch 17,
wobei der Verriegelungsring (500) einen Ring aufweisen kann, welcher eine Reihe von Gratvorsprüngen (501, 502) auf seiner Innen- und Außenoberfläche hat, wobei die Gratvorsprünge (501, 502) an korrespondierenden Positionen der Innen- und Außenoberfläche des Rings (500) vorgesehen sind.

19. Regelkopf (100, 600) nach Anspruch 18,
wobei die Innenwand (503) des Gehäuses (103, 603) mit einer Reihe von Schlitzen (507) vorgesehen ist, welche mit den Gratvorsprüngen (502) der Innenoberfläche des Verriegelungsrings (500) korrespondieren und die Außenwand (504) des Gehäuses (103, 603) mit einer Reihe von Spalten (506) vorgesehen ist, welche mit den Gratvorsprüngen (501) der Außenoberfläche des Verriegelungsrings (500) korrespondieren, wobei dort doppelt so viele Spalten (506) auf der Außenwand (504) als Schlitze (507) auf der Innenwand (503) sind.

20. Regelkopf (100, 600) nach Anspruch 19,
wobei die erste Stellung des Verriegelungsrings (500) dem entspricht, dass die Gratvorsprünge (501) des Verriegelungsrings (500) mit den Spalten (506) der Außenwand (504) und den Schlitzen (507) der Innenwand (503) ausgerichtet sind, und die zweite Stellung des Verriegelungsrings (500) dem entspricht, dass die äußeren Gratvorsprünge (501) des Verriegelungsrings (500) mit den Spalten (506) der Außenwand (504) ausgerichtet sind, allerdings die inneren Gratvorsprünge des Verriegelungsrings (500) nicht mit den Schlitzen (507) der Innenwand (503) ausgerichtet sind.

21. Regelkopf (100, 600) nach einem der Ansprüche 18 bis 20,
wobei der Verriegelungsring (500) mittels eines geeigneten Werkzeugs entnommen und/oder zurückgesetzt werden kann, welches einen Schlitzring (511) aufweist, welcher einen oder mehrere aufgekantete Hakenbereiche (512) aufweist, welche ausgebildet sind, um in den Spalt zwischen der äußeren Oberfläche des Verriegelungsrings (500) und der äußeren Wand (504) des Gehäuses (103, 603) eingesetzt zu werden, um die Gratvorsprünge auf der äußeren Oberfläche des Verriegelungsrings (500) mit Hakenlaschen (513), welche von den Seiten der Hakenbereiche (512) vorstehen, in Eingriff zu bringen.

22. Regelkopf (100, 600) nach Anspruch 21,
wobei die Hakenbereiche (512) mit abgeschrägten oberen Kanten (514) versehen sind, um das Einsetzen zwischen dem Verriegelungsring und der äußeren Wand (504) zu vereinfachen.

23. Regelkopf (100, 600) nach einem der Ansprüche 11 bis 22,
wobei das komplementäre Gebilde für den "Schnappsitz" in der verriegelten Stellung ausgebildet ist, um eine Eingriffskante (142) bereitzustellen, wobei die Kante (142) derart ausgebildet ist, dass ein zweckbestimmtes Werkzeug (400) notwendig ist, um die Lippe (133) von der verriegelten Stellung in die entriegelte Stellung an der Kante vorbei zu bewegen.

24. Regelkopf (100, 600) nach Anspruch 23,
wobei das komplementäre Gebilde für den "Schnappsitz" in der verriegelten Stellung modifizierbar ist, um die Eingriffskante bereitzustellen.

25. Regelkopf (100, 600) nach Anspruch 23 oder 24,
wobei das zweckbestimmte Werkzeug (400) einen Schlitzring (410) aufweist, welcher mit einer flach abfallenden Oberfläche (432) versehen ist, die in einem Kantenstoß (442) endet, welche komplementär zu der Eingriffskante ist und ausgebildet ist, um an der Eingriffskante (142) anzuliegen.

26. Regelkopf (100, 600) nach einem der Ansprüche 9 bis 25,
wobei eine Vielzahl von Schlitzen (183, 683) in dem Gehäuse (103, 603) benachbart zu dem Erfassungselement (107, 207, 307, 607) gebildet sind und weitere Schlitze (184, 684) in dem Körper (104, 604) vorgesehen sind, wobei sich eine Luftströmung durch das Gehäuse (103, 603) entweder in einer axialen Richtung oder in einer Richtung quer zu der Achse ausbilden kann.

27. Regelkopf (100, 600) nach einem der Ansprüche 9 bis 26,
wobei mindestens ein Verriegelungsmittel vorgesehen ist, wobei das Bewegungsausmaß des Körpers (104, 604) von einem vorbestimmten Maximum und/oder Minimum begrenzt sein kann.

28. Regelkopf (100, 600) nach Anspruch 28,
wobei das Verriegelungsmittel ein oder mehrere Stifte (106) aufweist.

29. Regelkopf (600) nach einem der vorherigen Ansprüche,
wobei das Gehäuse (603) von dem Regelkopf (600) unter Verwendung eines Werkzeugs (400) entfernbar ist, welches einen Schlitzring (410) aufweist und mit aufgekanteten Bereichen (441) versehen ist, welche eine abgeschrägte Kante (442) haben.

30. Regelkopf (600) nach einem der Ansprüche 1 bis 10,
wobei der Regelkopf (600) getrennt von dem Ventil, auf einer Oberfläche, angebracht ist und mit dem Ventil über ein hydraulisches Übertragungssystem (700) verbunden ist, welches bedienbar ist, um eine Bewegung des Eingriffselements (609) auf den Betätigungsstift des Ventils zu übertragen.

31. Regelkopf (600) nach Anspruch 30,
wobei die Basis (601) derart auf der Oberfläche angebracht ist, dass sie sich nicht bezüglich der Oberfläche dreht und wobei der Körper (604) ausgebildet ist, um sich mit dem Gehäuse (603) mitzudrehen und wobei eine Drehung des Gehäuses (603) dadurch eine axiale Bewegung des Körpers (604) relativ zu der Basis (601) bewirkt.

32. Regelkopf (600) nach Anspruch 31,
wobei das Erfassungselement (607) derart in dem Körper angebracht ist, dass das Eingriffselement (609) sich axial in Reaktion auf eine Drehung des Gehäuses bewegt, wobei sich das Erfassungselement (609) jedoch im Wesentlichen nicht axial in Reaktion auf eine Drehung des Gehäuses (603) bewegt.

33. Regelkopf (600) nach einem der Ansprüche 30 bis 32,
wobei die Basis (607) über eine Montageplatte (710) auf die Oberfläche montiert ist und die Montageplatte (710) ferner ausgebildet ist, um Gehäuserückhaltemittel (720) derart an der Oberfläche zu sichern, dass sich die Gehäuserückhaltemittel (720) nicht relativ zu der Oberfläche drehen.

34. Regelkopf (600) nach Anspruch 33,
wobei das Gehäuse (603) und das Gehäuserückhalteelement (720) mit zusammenarbeitenden Bestandteilen versehen sind, welche es ermöglichen, dass das Gehäuse (603) in der verriegelten und entriegelten Stellung gehalten wird und zwischen diesen bewegt wird.

35. Regelkopf (600) nach Anspruch 34,
wobei Reihen von Verriegelungszähnen (611, 613) auf dem Gehäuse (603) und auf dem Gehäuserückhalteelement (720) vorgesehen sind, welche sich verzahnen, wenn das Gehäuse (603) in der verriegelten Stellung ist, wobei eine Drehung des Gehäuses (603) verhindert wird, und welche sich nicht verzahnen, wenn das Gehäuse (603) in der entriegelten Stellung ist, bei der eine Drehung des Gehäuses (603) ermöglicht ist.

36. Durchflussventil, welches einen Regelkopf (100, 600) nach einem der Ansprüche 1 bis 29 umfasst.

37. Durchflussventil nach Anspruch 36,
wobei das Durchflussventil ein Thermostatdurchflussventil zum Regulieren der Wasserversorgung zu einem Heizkörper ist.

## Revendications

1. Tête (100, 600) de commande pour un robinet, la tête (100, 600) de commande comportant : un boîtier (103, 603) et un élément (109, 609) de coopération, l'élément (109, 609) de coopération étant conçu pour coopérer avec une broche de fonctionnement d'un robinet et le boîtier (103, 603) pouvant être pivoté par rapport à un axe pour entraîner un mouvement axial de l'élément (109, 609) de coopération, **caractérisée en ce que** le boîtier (103, 603) est mobile entre une position déverrouillée, dans laquelle le boîtier (103, 603) peut pivoter par rapport à son axe, et une position verrouillée, dans laquelle le boîtier (103, 603) ne peut pas pivoter par rapport à son axe, et dans laquelle le mouvement du boîtier (103, 603) entre les positions verrouillée et déverrouillée est un mouvement axial.

2. Tête (100, 600) de commande suivant la revendication 1, dans laquelle le robinet est un robinet du genre ayant une broche de fonctionnement qui fait saillie du corps (104, 604) du robinet à l'encontre d'une force de sollicitation, le débit passant dans le robinet étant restreint lorsque la broche de fonctionnement est sollicitée dans le corps (104, 604) du robinet.

3. Tête (100, 600) de commande suivant l'une des revendications précédentes, dans laquelle l'élément (109, 609) de coopération est connecté à un élément (107, 207, 307, 607) capteur, qui subit une expansion linéaire en réponse à un changement dans la température ambiante et peut ainsi être mis en fonctionnement pour déplacer l'élément (109, 609) de coopération en réponse à un changement de la température ambiante.

4. Tête (100, 600) de commande suivant la revendication 3, dans laquelle l'élément (107, 207, 307, 607) capteur est monté à l'intérieur du boîtier (103, 603), de sorte que son expansion linéaire a lieu axialement et l'élément (109, 609) de coopération est ainsi déplacé axialement.

5. Tête (100, 600) de commande suivant la revendication 4, dans laquelle l'élément (107, 207, 307, 607) capteur est mis en oeuvre par une cartouche liquide ou de cire (107, 207).

6. Tête (100, 600) de commande suivant la revendication 5, dans laquelle l'élément (107, 207, 307, 607) capteur comporte un soufflet (307) ayant une chambre pouvant être étendue reliée à l'élément (109, 609) de coopération et un réservoir situé à distance en communication avec celle-ci.

7. Tête (100, 600) de commande suivant l'une quelconque des revendications 4 à 6, dans laquelle un mécanisme de compensation est prévu pour relier l'élément (107, 207, 307, 607) capteur à l'élément (109, 609) de coopération, le mécanisme de compensation comportant un boîtier (110, 210, 310, 610) de ressort et un ressort (108, 208, 308, 608) qui est contenu en son sein.

8. Tête (100, 600) de commande suivant l'une quelconque des revendications 4 à 7, dans laquelle un porteur est disposé à l'intérieur du boîtier (103, 603), l'élément (107, 207, 307, 607) capteur étant disposé à l'intérieur du porteur et l'élément (109, 609) de coopération faisant saillie du porteur.

9. Tête (100, 600) de commande suivant la revendication 8, dans laquelle le porteur comporte une base (101, 601) et un corps (104, 604), et dans laquelle le corps (104, 604) et la base (101, 601) sont mobiles l'un par rapport à l'autre dans une direction parallèle à l'axe du boîtier (103, 603).

10. Tête (100, 600) de commande suivant la revendication 9, dans laquelle le boîtier (103, 603) et la base (101, 601) sont conçus de sorte que le boîtier (103, 603) s'adapte par encliquetage dans les positions verrouillée et déverrouillée, l'adaptation par encliquetage étant obtenue par le fait de prévoir une lèvre (133) faisant saillie sur l'un du boîtier (103, 603) ou de la base (101, 601) et des formations complémentaires sur l'autre du boîtier (103, 603) ou de la base (101, 601).

11. Tête (100, 600) de commande suivant la revendication 10, dans laquelle la base (101, 601) est montée sur le robinet de sorte qu'elle ne peut pas tourner par rapport au robinet et le corps (104, 604) est conçu pour tourner avec le boîtier (103, 603) et dans laquelle la rotation du boîtier (103, 603) entraîne ainsi un mouvement axial du corps (104, 604) par rapport à la base (101, 601).

12. Tête (100, 600) de commande suivant la revendication 11, dans laquelle l'élément (107, 207, 307, 607) capteur est monté sur le corps (104, 604) et est ainsi déplacé axialement par rotation du boîtier (103, 603).

13. Tête (100, 600) de commande suivant la revendication 12, dans laquelle la base (101, 601) et le boîtier (103, 603) sont munis de particularités de coopération permettant au boîtier (103, 603) d'être maintenu dans les positions verrouillée et déverrouillée et de se déplacer entre les positions verrouillée et déverrouillée.

14. Tête (100, 600) de commande suivant la revendication 13, dans laquelle les particularités de coopération comportent des ensembles de dents (111, 113) de verrouillage disposées sur le boîtier (103, 603) et sur la base (101, 601), qui engrènent lorsque le boîtier (103, 603) est dans la position verrouillée empêchant la rotation du boîtier (103, 603) et qui n'engrènent pas lorsque le boîtier (103, 603) est dans la position déverrouillée pour ainsi permettre la rotation du boîtier (103, 603).

15. Tête (100, 600) de commande suivant la revendication 14, dans laquelle la formation complémentaire pour une adaptation par encliquetage dans la position verrouillée est une formation (132) en forme de dent ayant une pente sensiblement en douceur.

16. Tête (100, 600) de commande suivant l'une quelconque des revendications 11 à 15, dans laquelle le boîtier (103, 603) comporte des parois (503, 504) intérieure et extérieure, séparées l'une de l'autre par un interstice qui ne s'étend pas sur toute la hauteur du boîtier (103, 603), et dans laquelle les particularités de coopération du boîtier (103, 603) et les particularités d'adaptation par encliquetage du boîtier (103, 603) sont disposées sur la paroi (503) intérieure du boîtier (103, 603).

17. Tête (100, 600) de commande suivant la revendication 16, dans laquelle l'interstice entre les parois (503, 504) intérieure et extérieure est conçu pour recevoir une bague (500) de verrouillage, la bague (500) de verrouillage pouvant être manoeuvrée dans une première position pour permettre le déplacement du boîtier (103, 603) entre les positions verrouillée et déverrouillée et dans une seconde position pour empêcher le déplacement du boîtier (103, 603) entre les positions verrouillée et déverrouillée.

18. Tête (100, 600) de commande suivant la revendication 17, dans laquelle la bague (500) de verrouillage peut comporter une bague ayant une série de saillies (501, 502) en forme de nervure sur ses surfaces intérieure et extérieure, les saillies (501, 502) en forme de nervure étant disposées en des positions correspondantes sur les surfaces intérieure et extérieure de la bague (500).

19. Tête (100, 600) de commande suivant la revendication 18, dans laquelle la paroi (503) intérieure du boîtier (103, 603) est munie d'une série de rainures (507) correspondant aux saillies (502) en forme de nervure de la surface intérieure de la bague (500) de verrouillage et la paroi (504) extérieure du boîtier (103, 603) est munie d'une série de fentes (506) correspondant aux saillies (501) en forme de nervure de la surface extérieure de la bague (500) de verrouillage, deux fois plus de fentes (506) étant prévues sur la paroi (504) extérieure que de rainures (507) sur la paroi (503) intérieure.

20. Tête (100, 600) de commande suivant la revendication 19, dans laquelle la première position de la bague (500) de verrouillage correspond aux saillies (501) en forme de nervure de la bague (500) de verrouillage qui sont alignées avec les fentes (506) de la paroi (504) extérieure et les rainures (507) de la paroi (503) intérieure et la deuxième position de la bague (500) de verrouillage correspond aux saillies (501) en forme de nervure extérieures de la bague (500) de verrouillage qui sont alignées avec les fentes (506) de la paroi (504) extérieure mais les saillies en forme de nervure intérieures de la bague (500) de verrouillage ne sont pas alignées avec les rainures (507) de la paroi (503) intérieure.

21. Tête (100, 600) de commande suivant l'une quelconque des revendications 18 à 20, dans laquelle la bague (500) de verrouillage peut être retirée et/ou repositionnée au moyen d'un outil approprié comportant une bague (511) fendue ayant un ou plusieurs parties (512) en crochets verticaux conçues pour être insérées dans l'interstice entre la surface extérieure de la bague (500) de verrouillage et la paroi (504) extérieure du boîtier (103, 603) pour ainsi faire coopérer les saillies en forme de nervure sur la surface extérieure de la bague (500) de verrouillage avec des pattes (513) d'accrochage faisant saillie des côtés des parties (512) en crochets.

22. Tête (100, 600) de commande suivant la revendication 21, dans laquelle les parties (512) en crochets sont munies de bords (514) supérieurs biseautés pour faciliter l'insertion entre la bague de verrouillage et la paroi (504) extérieure.

23. Tête (100, 600) de commande suivant l'une quelconque des revendications 11 à 22, dans laquelle la formation complémentaire pour l'adaptation par encliquetage dans la position verrouillée est conçue pour présenter un bord (142) de coopération, le bord (142) étant conçu de sorte qu'un outil (400) dédié est nécessité pour déplacer la lèvre (133) au-delà du bord, de la position verrouillée à la position déverrouillée.

24. Tête (100, 600) de commande suivant la revendication 23, dans laquelle la formation complémentaire pour l'adaptation par encliquetage dans la position verrouillée peut être modifiée pour mettre à disposition le bord de coopération.

25. Tête (100, 600) de commande suivant la revendication 23 ou 24, dans laquelle l'outil (400) dédié comporte une bague (410) fendue munie d'une surface (432) pentue en douceur se terminant en un bord (442) de butée complémentaire du bord de coopération et conçu pour venir buter contre le bord (142) de coopération.

26. Tête (100, 600) de commande suivant l'une quelconque des revendications 9 à 25, dans laquelle une pluralité de rainures (183, 683) sont formées dans le boîtier (103, 603) de manière voisine de l'élément (107, 207, 307, 607) capteur et des rainures (184, 684) supplémentaires sont disposées dans le corps (104, 604), un débit d'air passant par le boîtier (103, 603) pouvant ainsi être établi soit dans une direction axiale, soit dans une direction transversale à l'axe.

27. Tête (100, 600) de commande suivant l'une quelconque des revendications 9 à 26, dans laquelle au moins des moyens de verrouillage sont prévus suivant lesquels le domaine de déplacement du corps (104, 604) peut être limité à un maximum et/ou à un minimum défini à l'avance.

28. Tête (100, 600) de commande suivant la revendication 27, dans laquelle les moyens de verrouillage comportent une ou plusieurs broches (106).

29. Tête (100, 600) de commande suivant l'une quelconque des revendications précédentes, dans laquelle le boîtier (603) peut être retiré de la tête (600) de commande par l'utilisation d'un outil (400) comportant une bague (410) fendue et munie de parties (441) verticales ayant un bord (442) biseauté.

30. Tête (600) de commande suivant l'une quelconque des revendications précédentes, dans laquelle la tête (600) de commande est montée à distance du robinet, sur une surface, et est connectée au robinet par l'intermédiaire d'un système (700) de transfert hydraulique qui peut être mis en fonctionnement pour transférer un déplacement de l'élément (609) de coopération à la broche de fonctionnement du robinet.

31. Tête (600) de commande suivant la revendication 30, dans laquelle la base (601) est montée sur la surface de sorte qu'elle ne peut pas pivoter par rapport à la surface et le corps (604) est conçu pour pivoter avec le boîtier (603), et la rotation du boîtier (603) entraînant ainsi un mouvement axial du corps (604) par rapport à la base (601).

32. Tête (600) de commande suivant la revendication 31, dans laquelle l'élément (607) capteur est monté dans le corps de sorte que l'élément (609) de coopération se déplace axialement en réponse à la rotation du boîtier mais l'élément (609) capteur ne se déplace sensiblement pas axialement en réponse à la rotation du boîtier (603).

33. Tête (600) de commande suivant l'une quelconque des revendications 30 à 32, dans laquelle la base (607) est montée sur la surface par l'intermédiaire d'une plaque (710) de montage et la plaque (710) de montage est conçue, en outre, pour fixer des moyens (720) de maintien de boîtier à la surface de sorte que les moyens (720) de maintien de boîtier ne tournent pas par rapport à la surface.

34. Tête (600) de commande suivant la revendication 33, dans laquelle le boîtier (603) et l'élément (720) de maintien de boîtier sont munis de particularités de coopération permettant au boîtier (603) d'être maintenu dans les positions verrouillée et déverrouillée et de se déplacer entre les positions verrouillée et déverrouillée.

35. Tête (600) de commande suivant la revendication 34, dans laquelle des ensembles de dents (611, 613) de verrouillage sont disposés sur le boîtier (603) et sur l'élément (720) de maintien de boîtier, et engrènent lorsque le boîtier (603) se trouve dans la position verrouillée empêchant la rotation du boîtier (603) et n'engrènent pas lorsque le boîtier (603) est dans la position déverrouillée pour ainsi permettre une rotation du boîtier (603).

36. Robinet incorporant une tête (100, 600) de commande suivant l'une quelconque des revendications 1 à 29.

37. Robinet suivant la revendication 36, dans lequel le robinet est un robinet thermostatique pour réguler l'alimentation en eau d'un radiateur.
